# EUROPÄISCHE PATENTANMELDUNG

(11) **EP 0 982 319 A2**
(43) Veröffentlichungstag der Anmeldung: **01.03.2000**
(21) Anmeldenummer: 99115175.4
(22) Anmeldetag: 13.08.1999
(51) Int. Cl.: C08F 4/64, C08F 10/00

(54) **Katalysatorsystem auf Basis von Fulven-Cyclopentadienyl-Metallkomplexen**

(30) Priorität: 20.08.1998 DE 19837739
(71) Anmelder: Bayer Aktiengesellschaft, 51368 Leverkusen (DE)
(72) Erfinder: Beckhaus, Rüdiger, Dr., 26131 Oldenburg (DE); Heinrichs, Jürgen, 52064 Aachen (DE); Becke, Sigurd, Dr., 51503 Rösrath (DE)

(57) **Zusammenfassung**

Die vorliegende Erfindung betrifft ein Katalysatorsystem auf Basis von Fulven-Cyclopentadienyl-Metallkomplexen, ein Verfahren zu dessen Herstellung sowie dessen Verwendung für die Polymerisation und Copolymerisation von Olefinen und/oder Dienen.

## Beschreibung

Die vorliegende Erfindung betrifft ein Katalysatorsystem auf Basis von Fulven-Cyclopentadienyl-Metallkomplexen, ein Verfahren zu dessen Herstellung sowie dessen Verwendung für die Polymerisation und Copolymerisation von Olefinen und/oder Dienen.

Metallkomplexe mit Cyclopentadienylliganden sind seit der Entdeckung des Ferrocens intensiv untersucht worden. Die Verwendung von Biscyclopentadienyl-Metallkomplexen (Metallocenen), im Gemisch mit aktivierenden Cokatalysatoren, bevorzugt Alumoxanen, zur Polymerisation von Olefinen und Diolefinen ist seit langem bekannt (z.B. EP-A 69 951, 129 368, 351 392, 485 821, 485 823). Die Metallocene haben sich als hoch wirksame, spezifische Katalysatoren bei der Polymerisation von Olefinen erwiesen. Auch Metallkomplexe mit nur einem Cyclopentadienylliganden (Halbsandwichkomplexe) sind in Kombination mit Cokatalysatoren als spezifische Polymerisationskatalysatoren geeignet (US 5 132 380, EP 416 815, WO 91/04 257, WO 96/13 529). Zur Steigerung der Aktivität, Selektivität, Steuerung der Mikrostruktur, der Molgewichte und der Molgewichtsverteilung wurden daher in den letzten Jahren eine Vielzahl neuer Metallocen-Katalysatoren bzw. Halbsandwich-Katalysatoren für die Polymerisation von olefinischen Verbindungen entwickelt. Metallkomplexe mit Cyclopentadienylliganden, insbesondere chirale ansa-Metallocene sind auch als Hydrierkatalysatoren z.B. für Olefine oder Imine beschrieben (z.B. J. Am. Chem. Soc. 1993, 115, 12569; J. Am. Chem. Soc. 1994, 116, 8952-8965). Chirale Metallocene werden auch in der asymmetrischen Synthese, z.B. für asymmetrische Diels-Alder Reaktionen eingesetzt (J. Chem. Soc. Chem. Commun. 1995, 1181).

Über Metallkomplexe mit Fulvenliganden ist vergleichsweise wenig bekannt.

Nach Bercaw et al., JACS (1972), 94, 1219 entsteht durch Thermolyse von Bis(η⁵-pentamethylcyclopentadienyl)titandimethyl der Fulvenkomplex (η⁶-2,3,4,5-Tetramethylcyclopentadienyl-1-methylen)(η⁵-pentamethylcyclopentadienyl)titanmethyl. In T. J. Marks et al., JACS (1988), 110, 7701 wird die Thermolyse von Pentamethylcyclopentadienyl-Komplexen des Zirconiums und Hafniums beschrieben. Durch Thermolyse von Bis(η⁵-pentamethylcyclopentadienyl)zirconiumdiphenyl entsteht der Fulvenkomplex (η⁶-2,3,4,5-Tetramethylcyclopentadienyl-1-methylen)(η⁵-pentamethylcyclopentadienyl)zirconiumphenyl.

In einer älteren Anmeldung werden Fulven-Metallkomplexe und ein Verfahren zu deren Herstellung beschrieben (DE-Anmeldung 19 756 742.8). Durch Umsetzung einer Fulvenverbindung mit einem geeigneten Übergangsmetallkomplex in Gegenwart eines Reduktionsmittels sind Fulven-Metallkomplexe in hohen Ausbeuten zugänglich, die nicht nach dem thermischen Verfahren hergestellt werden können. Die direkte Einführung des Fulvenliganden ermöglicht den Zugang zu einer Vielzahl neuen Fulven-Metallkomplexen. In Kombination mit Cokatalysatoren entstehen spezifische Polymerisationskatalysatoren, deren Katalysatoraktivität vergleichbar ist mit der Aktivität von Katalysatoren auf Basis von Metallocenen.

Ein Verfahren zur thermischen Herstellung von Fulven-Metallkomplexen und deren Verwendung als Polymerisationskatalysatoren in Verbindung mit Cokatalysatoren wird in der älteren Anmeldung DE 19 732 804.0 beschrieben. In Kombination mit Cokatalysatoren entstehen spezifische Polymerisationskatalysatoren, deren Katalysatoraktivität vergleichbar ist mit der Aktivität von Katalysatoren auf Basis von Metallocenen. Von Nachteil ist, daß Fulven-Metallkomplexe extrem luft- und feuchtigkeitsempfindlich sind. Daher müssen Fulven-Metallkomplexe unter Inertgasbedingungen hergestellt und aufbewahrt werden.

Über das Reaktionsverhalten von Fulven-Metallkomplexen ist wenig bekannt. In Z. Naturforsch. 44 b, 1989, 1593-1598 wird die Reaktion von Aldehyden und

Ketonen mit der Komplexverbindung (η⁶-Cyclopentadienyl-1-methylen)(η⁵-methylcyclo-pentadienyl)phenyltitan beschrieben. In Organometallics 1991, 10, 1637-1639 wird die Umsetzung von (η⁶-2,3,4,5-Tetramethylcyclo-pentadienyl-1-methylen)(η⁵-penta-methylcyclopentadienyl)titanchlorid mit Acetophenon beschrieben. Die Reaktion von Isonitrilen mit Pentamethylcyclopentadienyl-tetramethyl-fulvenkomplexen des Titan und Zirkonium ist in Organometallics 1991, 10, 2665-2671 beschrieben. Die dort beschriebenen Reaktionsprodukte allein sind jedoch nicht aktiv bei der Polymerisation von olefinischen Verbindungen.

Aufgabe der vorliegenden Erfindung war es, ein Katalysatorsystem zu finden, daß die oben beschriebenen Nachteile wenigstens teilweise vermeidet. Insbesondere bestand die Aufgabe darin, stabile Katalysatoren zu finden, die einfach zu synthetisieren und technisch leicht zu handhaben sind und sich ohne Probleme für die Polymerisation insbesondere von olefinischen Verbindungen aktivieren lassen.

Es wurde nun überraschend gefunden, daß Katalysatorsysteme auf Basis von Fulven-Cyclopentadienyl-Metallkomplexen in Kombination mit ungesättigten Verbindungen, die ein oder mehrere Heteroatome enthalten, sich besonders gut für die gestellten Aufgaben eignen.

Gegenstand der vorliegenden Erfindung ist ein Katalysatorsystem, herstellbar durch Umsetzung
a) eines Fulven-Cyclopentadienyl-Metallkomplexes der Formel (I) 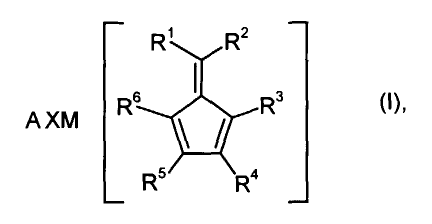 wobei
   - M: ein Metall aus der Gruppe Titan, Zirkonium und Hafnium ist,
   - A: ein Cyclopentadienyl der Formel C₅H_{q}R⁷_{5-q} mit q für 0, 1, 2, 3, 4, 5, ein Indenyl der Formel C₉H₇₋ᵣR⁷ᵣ mit r für 0, 1, 2, 3, 4, 5, 6, 7, sowie ein Fluorenyl der Formel C₁₃H₉₋ₚR⁷ₚ mit p für 0, 1, 2, 3, 4, 5, 6, 7, 8, bedeutet,
   - X: ein Wasserstoffatom, eine C₁- bis C₁₀-Alkylgruppe, eine C₁- bis C₁₀-Alkoxygruppe, eine C₆- bis C₁₀-Arylgruppe, eine C₆- bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀-Arylalkenylgruppe, eine durch C₁-C₁₀-Kohlenwasserstoffreste substituierte Silylgruppe, ein Halogenatom oder ein Amid der Formel NR⁷₂ bedeutet,
   - R¹, R², R³, R⁴, R⁵, R⁶: gleich oder verschieden sind und stehen für Wasserstoff, Halogen, eine Cyanogruppe, eine C₁- bis C₂₀-Alkylgruppe, eine C₁- bis C₁₀-Fluoralkylgruppe, eine C₆- bis C₁₀-Fluorarylgruppe, eine C₁- bis C₁₀-Alkoxygruppe, eine C₆- bis C₂₀-Arylgruppe, eine C₆-bis C₁₀-Aryloxygruppe, eine C₂- bis C₁₀-Alkenylgruppe, eine C₇-bis C₄₀-Arylalkylgruppe, eine C₇- bis C₄₀-Alkylarylgruppe, eine C₈-bis C₄₀- Arylalkenylgruppe, eine C₂ bis C₁₀-Alkinylgruppe, eine durch C₁-C₁₀-Kohlenwasserstoffreste substituierte Silylgruppe, eine durch einen C₁-C₁₀-Kohlenwasserstoffrest substituierte Sulfidgruppe, eine gegebenenfalls durch C₁-C₂₀-Kohlenwasserstoffreste substituierte Aminogruppe,
   oder
   - R¹, R², R³, R⁴, R⁵, R⁶: jeweils zusammen mit den sie verbindenden Atomen ein oder mehrere aliphatische oder aromatische Ringsysteme bilden, welche ein oder mehrere Heteroatome (O, N, S) enthalten können und 5 bis 10 Kohlenstoffatome aufweisen,
   - R⁷: steht für Wasserstoff, eine C₁- bis C₂₀-Alkylgruppe, eine C₆- bis C₂₀-Arylgruppe, eine C₇- bis C₄₀-Arylalkylgruppe, eine C₇- bis C₄₀-Alkylarylgruppe, eine durch C₁-C₁₀-Kohlenwasserstoffreste substituierte Silylgruppe, eine gegebenenfalls durch C₁-C₂₀-Kohlenwasserstoffreste substituierte Aminogruppe,
   mit
b) einer ungesättigten Verbindung der Formel (II)

   R⁸ₐR⁹_{b} CY, (II)

   wobei
   - R⁸, R⁹: gleich oder verschieden sind, ein Wasserstoffatom, ein Halogenatom, eine Hydroxygruppe, eine C₁- bis C₁₀-Alkylgruppe, eine C₁- bis C₁₀-Alkoxygruppe, eine gegebenenfalls durch Halogenatome substituierte C₆- bis C₁₀-Arylgruppe, eine C₆- bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀-Arylalkenylgruppe, eine gegebenenfalls durch C₁-C₂₀-Kohlenwasserstoffreste substituierte Aminogruppe, oder eine gegebenenfalls durch C₁-C₂₀-Kohlenwasserstoffreste substituierte Iminogruppe bedeuten
   - Y: ein Stickstoffatom, ein Sauerstoffatom, ein Schwefelatom oder eine Gruppe der Formel NR¹⁰ bedeutet, wobei R¹⁰ die gleiche Bedeutung wie R⁸ und R⁹ hat und
   - a, b: die Zahlen 0 oder 1 darstellen,
   und anschließender Umsetzung des Produktes mit
c) einem Cokatalysator.

Vorteilhaft liegt das molare Verhältnis von Komponente a) zu Komponente c) im Bereich von 1:0,1 bis 1:10 000, bevorzugt 1:0,5 bis 1 000, besonders bevorzugt 1:1 bis 1:1 000.

Als ungesättigte Verbindungen der Formel (II) kommen bevorzugt Verbindungen der Formel (IIa) in Frage, 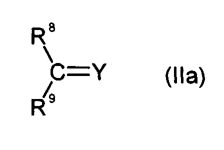 wobei R⁸, R⁹ und Y die zuvor genannte Bedeutung haben und gegebenenfalls R⁸ und R⁹ mit dem sie verbindenden Kohlenstoffatom ein Ringsystem bilden, welches ein oder mehrere Heteroatome (O, N, S) enthalten kann,
oder Verbindungen der Formel (IIb), 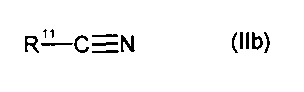 oder Verbindungen der Formel (IIc),

C≡N―R¹¹ (IIc)

oder Verbindungen der Formel (IId) 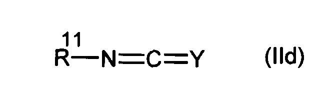 wobei Y für ein Sauerstoffatom oder Schwefelatom steht und
- R¹¹: ein Wasserstoffatom, eine C₁- bis C₁₀-Alkylgruppe, eine gegebenenfalls durch Halogenatome substituierte C₆- bis C₁₀-Arylgruppe, eine C₇- bis C₄₀-Arylalkylgruppe oder eine C₇- bis C₄₀-Alkylarylgruppe bedeutet.

Besonders bevorzugt sind die Verbindungen der Formel (IIa), wobei Y für ein Sauerstoffatom steht und R⁸ und R⁹ die zuvor genannte Bedeutung haben. Hierzu gehören Aldehyde, wie z.B. Formaldehyd, Acetaldehyd, Propionaldehyd, n-Butyroaldehyd, Isobutylaldehyd, Pivalinaldehyd, Octanal, Octadecenal, Acrolein, Crotonaldehyd, Benzaldehyd, Furfurol und Dialdehyde, wie z.B. Glyoxal, und Ketone, wie z.B. Aceton, Methylethylketon, Diethylketon, Hexanon-(2), Hexanon-(3), Methyl-tert.-butylketon, Di-n-propylketon, Diisopropylketon, Diisobutylketon, Di-tert.-butylketon, Dicyclohexylketon, Methylcyclohexylketon, Diamylketon, Heptadecylphenylketon, Mesityloxid, Phoron, Isophoron, Acetophenon, 4-Fluoracetophenon, 3,5-Di-(trifluormethyl)acetophenon, Pentamethylacetophenon, Benzophenon, 4,4'-Difluorbenzophenon, Decafluoro-benzophenon, Benzalaceton, Desoxybenzoin, Cyclohexanon, Menthon, Campher, Fluorenon,und Diketone, wie z.B. Diacetyl, Acetylaceton, und Carbonsäureester, wie z.B. Essigsäureethylester, Benoesäurebenzylester.

Zu den bevorzugten Verbindungen der Formel (IIb) gehören Nitrile, wie z.B. Acetonitril, n-Butyronitril, 4-Chlorphenylnitril, Pivalinsäurenitril und Zimtsäurenitril. Zu den bevorzugten Verbindungen der Formel (IIc) gehören Isonitrile, wie z.B. 2,6-Dimethylphenylisonitril. Zu den bevorzugten Verbindungen der Formel (IId) gehören Isocyanate und Thioisocyanate, wie z.B. Cyclohexylisocyanat, Methylisothiocyanat.

Zu den speziellen Vertretern der Formel (II) gehören die ungesättigten Verbindungen der Formel (IIa), wobei Y eine Gruppe der Formel NR¹⁰ bedeutet und R⁸, R⁹ die zuvor genannte Bedeutung haben. Hierzu gehören Imine, wie z.B. Acetophenonbenzylimin und Hydrazone, wie z.B. Acetophenonhydrazon.

Ein weiterer Gegenstand der Erfindung ist ein Verfahren zur Herstellung des Katalysatorsystems. Die Komponenten des erfindungsgemäßen Katalysatorsystems a), b) und c) werden in festgelegter Reihenfolge umgesetzt, wobei zuerst die Komponenten a) und b) miteinander zur Reaktion gebracht werden. Diese Reaktion kann so durchgeführt werden, daß Komponente a) in einem geeigneten Lösungsmittel mit der Komponente b) bei Raumtemperatur umgesetzt wird. Das molare Verhältnis von a) zu b) liegt im Bereich von 100:1 bis 0,1:1, bevorzugt von 10:1 bis 0,5:1. Das entstandene Reaktionsprodukt kann isoliert werden und in einem separaten Reaktionsschritt mit Komponente c) in Kontakt gebracht werden. Auf eine vorhergehende Isolierung des Reaktionsproduktes aus der Umsetzung von Komponente a) mit b) kann gegebenenfalls auch verzichtet werden. Das molare Verhältnis von a) zu c) liegt vorteilhaft im Bereich von 1:0,1 bis 1:10 000, bevorzugt zwischen 1:0,5 bis 1:5 000, besonders bevorzugt zwischen 1:1 bis 1:1 000. Als geeignete Lösungsmittel kommen aliphatische oder aromatische Kohlenwasserstoffe in Frage. Beispiele hierfür sind unverzweigte aliphatische Kohlenwasserstoffe, wie Butan, Pentan, Hexan, Heptan, Octan, verzweigte aliphatische Kohlenwasserstoffe, wie Isobutan, Isopentan, Isohexan, cyclische aliphatische Kohlenwasserstoffe, wie Cyclohexan, Methylcyclohexan, aromatische Kohlenwasserstoffe, wie Benzol, Toluol und Xylol. Bevorzugt ist Hexan oder Toluol. Auch Mischungen verschiedener Lösungsmittel sind geeignet.

Die Herstellung des Katalysatorsystems erfolgt unter Ausschluß von Luft und Wasser unter Inertgasbedingungen (Schutzgastechnik). Beispiele für Inertgase sind Stickstoff oder Argon. Als Schutzgastechnik ist beispielsweise die im allgemeinen für metallorganisehe Substanzen übliche Schlenk-Technik geeignet.

Die Synthese der Fulven-Cyclopentadienyl-Metallkomplexe der Formel (I) kann durch Umsetzung einer Übergangsmetallverbindung der Formel (III)

AXₛLₙM, (III)

wobei
- A, X und M: die zuvor genannte Bedeutung besitzen und
- L: einen Neutralliganden darstellt
- s: die Zahl 1, 2 oder 3 bedeutet und
- n: eine Zahl von 0 bis 4 ist,
mit einer Fulvenverbindung der Formel (IV) 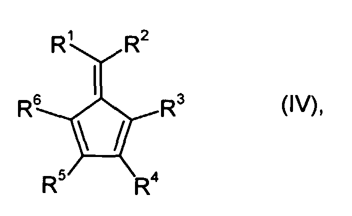 wobei
R¹, R², R³, R⁴, R⁵ und R⁶ die zuvor genannte Bedeutung besitzen,
in Gegenwart eines Reduktionsmittels erfolgen. Als Reduktionsmittel sind z.B. Alkalimetalle oder Erdalkalimetalle, C₁-C₆-Alkyllithium, Tri-C₁-C₆-alkylaluminiumverbindungen und Grignardreagenzien geeignet. Besonders bevorzugte Reduktionsmittel sind Lithium, Natriumamalgam, Magnesium, sowie n-Butyllithium. Die Umsetzung erfolgt bevorzugt in einem Ether, wie z.B. Diethylether oder Tetrahydrofuran.

Bevorzugte Verbindungen der Formel (IV) sind Fulvenverbindungen der Formel (V) 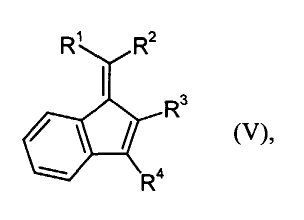 oder Fulvenverbindungen der Formel (VI) 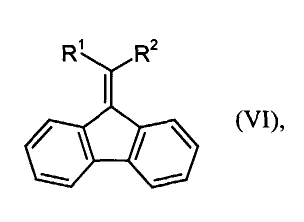 wobei R¹, R², R³ und R⁴ die zuvor genannte Bedeutung besitzen.

Besonders bevorzugte Verbindungen der Formel (IV) sind 6-Cyclohexylfulven, 6-Isopropylfulven, 6-tert-Butylfulven, 6-Phenylfulven, 6-(Dimethylamino)-fulven, 6,6-Bis(dimethylamino)fulven, 6,6-Dimethylfulven, 6,6-Bis(trifluormethyl)fulven, 6,6-Diphenylfulven, 6,6-Bis(pentafluorphenyl)fulven, 6,6-Pentamethylenfulven, 6,6-Tetramethylenfulven, 6,6-Trimethylenfulven, 2-(2,4-Cyclopentadien-1-yliden)-1,3-dithiolan, 5-Benzyliden-1,2,3-Triphenyl-1,3-cyclo-pentadien, 1,2,3,4-Tetramethylfulven, 1,2,3,4-Tetraphenylfulven, 2,3-Dimethylfulven, 2,3-Diisopropylfulven, 2,3-Diphenylfulven, 1,4-Dimethyl-2,3-diphenylfulven sowie 1,4-Diethyl-2,3-diphenylfulven.

Die Herstellung spezieller Fulven-Cyclopentadienyl-Metallkomplexe der Formel (I) nach dem thermischen Verfahren, wobei die Reste R¹ und R² Wasserstoff bedeuten, ist bekannt und beispielsweise beschrieben in T. J. Marks et al., Organometallics 1987, 6, 232-241.

Bevorzugt sind Fulven-Cyclopentadienyl-Metallkomplexe der Formel (I), in der
- R¹ bis R⁶: für eine C₁-C₃₀-Alkylgruppe, eine C₆-C₁₀-Arylgruppe, eine C₇-C₄₀-Alkylarylgruppe, insbesondere für Wasserstoff, Methyl, Trifluormethyl, Ethyl, n-Propyl, Isopropyl, n-Butyl, Isobutyl, tert.-Butyl, Phenyl, Pentafluorphenyl, Methylphenyl, Cyclohexyl oder Benzyl steht,
- A: für Cyclopentadienyl, Methylcyclopentadienyl, Benzylcyclopentadienyl, n-Propylcyclopentadienyl, n-Butylcyclopentadienyl, iso-Butylcyclopentadienyl, t-Butylcyclopentadienyl, Cyclopentylcyclopentadienyl, Octadecylcyclopentadienyl, 1,2-Dimethylcyclo-pentadienyl, 1,3-Dimethylcyclopentadienyl, 1,3-Di-isopropyl-cyclopentadienyl, 1,3-Di-t-butylcyclopentadienyl, 1-Ethyl-2-methylcyclo-pentadienyl, 1-Isopropyl-3-methylcyclopentadienyl, 1-(n-Butyl)-3-methyl-cyclopentadienyl 1-(t-Butyl)-3-methylcyclopentadienyl, Pentamethyl-cyclopentadienyl, 1,2,3,4-Tetramethyl-cyclopentadienyl, 1,2,4-Trimethyl-cyclopentadienyl, 1,2,4-Triisopropyl-cyclopentadienyl, 1,2,4-Tri(t-butyl)-cyclopentadienyl, Indenyl, Tetrahydroindenyl, 2-Methylindenyl, 4,7-Dimethylindenyl, 2-Methyl-4,5-benzoindenyl, 2-Methyl-4-phenylindenyl, Fluorenyl oder 9-Methyl-fluorenyl steht,
- X: Chlor, Methyl, Benzyl, Neopentyl oder Phenyl bedeutet,
und M die zuvor genannte Bedeutung hat.

Die angegebene Formel (I) für die Fulven-Metallkomplexe ist als eine formale Darstellung der Bindungsverhältsnisse zu sehen und stellt ein Beispiel einer Struktur-Variante dar. Die Bindungsverhältnisse in den Metallkomplexen sind u.a. abhängig vom Zentralatom, von der Oxidationsstufe sowie von den Substituenten des Fulven-Liganden.

Als Cokatalysatoren für Polymerisationen kommen die auf dem Gebiet der Metallocen-Katalyse bekannten Cokatalysatoren in Frage, wie polymere oder oligomere Aluminoxane, Lewissäuren sowie Aluminate und Borate. In diesem Zusammenhang wird insbesondere verwiesen auf Macromol. Symp. Vol. 97, Juli 1995, S. 1-246 (für Alumoxane) sowie auf EP 277003, EP 277004, Organometallics 1997, 16, 842-857 (für Borate), und EP 573403 (für Aluminate).

Insbesondere eignen sich als Cokatalysatoren Methylaluminoxan, durch Triisobutylaluminium modifiziertes Methylalumoxan, Isooctylaluminoxan, sowie Diisobutylalumoxan, Trialkylaluminiumverbindungen, wie Trimethylaluminium, Triethylaluminium, Triisobutylaluminium, Triisooctylaluminium, darüber hinaus Dialkylaluminiumverbindungen, wie Diisobutylaluminiumhydrid, Diisobutylaluminiumfluorid und Diethylaluminiumchlorid, substituierte Triarylaluminiumverbindungen, wie Tris(pentafluorphenyl)aluminium, sowie ionische Verbindungen, die als Anion Tetrakis(pentafluorphenyl)aluminat enthalten, wie Triphenylmethyl-tetrakis(pentafluorphenyl)aluminat, sowie N,N-Dimethylanilinium-tetrakis-(pentafluorphenyl)aluminat, substituierte Triarylborverbindungen, wie Tris-(pentafluorphenyl)bor sowie ionische Verbindungen, die als Anion Tetrakis-(pentafluorphenyl)borat enthalten, wie Triphenylmethyl-tetrakis-(pentafluorphenyl)borat, sowie N,N-Dimethylanilinium-tetrakis(pentafluorphenyl)-borat. Es können auch Gemische verschiedener Cokatalysatoren eingesetzt werden.

Als Polymerisation wird dabei sowohl die Homo- als auch die Copolymerisation der Olefine und/oder Diene verstanden. Insbesondere werden bei der Polymerisation eingesetzt C₂-C₁₀-Alkene, wie Ethylen, Propylen, Buten-1, Penten-1 und Hexen-1, Octen-1, Isobutylen und Arylalkene, wie Styrol. Als Diene werden insbesondere eingesetzt: konjugierte Diene, wie 1,3-Butadien, Isopren, 1,3-Pentadien, und nicht konjugierte Diene, wie 1,4-Hexadien, 1,5-Heptadien, 5,7-Dimethyl-1,6-octadien, 4-Vinyl-1-cyclohexen, 5-Ethyliden-2-norbornen, 5-Vinyl-2-norbornen und Dicyclopentadien.

Die erfindungsgemäßen Katalysatoren eignen sich für die Herstellung von Polyethylen und Ethylen(Co)polymeren, insbesondere von Kautschuken auf Basis von Copolymeren des Ethylens mit einem oder mehreren der genannten α-Olefine und der genannten Diene. Darüber hinaus eignet sich das erfindungsgemäße Katalysatorsystem für die Polymerisation von Cyclo-Olefinen wie Norbornen, Cyclopenten, Cyclohexen, Cyclooctan, und der Copolymerisation von Cycloolefinen mit Ethylen oder α-Olefinen.

Die Polymerisation kann in flüssiger Phase, in Gegenwart oder Abwesenheit eines inerten Lösungsmittels, oder in der Gasphase durchgeführt werden. Als Lösungsmittel eignen sich aromatische Kohlenwasserstoffe, wie Benzol und/oder Toluol, oder aliphatische Kohlenwasserstoffe, wie Propan, Hexan, Heptan, Octan, Isobutan, Cyclohexan oder Gemische der verschiedenen Kohlenwasserstoffe.

Es ist möglich, das erfindungsgemäße Katalysatorsystem auf einen Träger aufgebracht einzusetzen. Als geeignete Trägermaterialien sind z.B. zu nennen: anorganische oder organische polymere Träger, wie Silica, Zeolithe, Ruß, Aktivkohle, Aluminiumoxid, Polystyrol sowie Polypropylen.

Dabei kann das erfindungsgemäße Katalysatorsystem in üblicher Weise auf die Trägermaterialien aufgebracht werden. Methoden zur Trägerung von Katalysatorsystemen sind beispielsweise beschrieben in US 4 808 561, 4 912 075, 5 008 228 und 4 914 253.

Die Polymerisation wird im allgemeinen bei Drücken von 1 bis 1 000, bevorzugt 1 bis 100 bar, und Temperaturen von -100 bis +250°C, bevorzugt 0 bis +150°C, durchgeführt. Die Polymerisation kann in üblichen Reaktoren, kontinuierlich oder diskontinuierlich durchgeführt werden.

Die Erfindung wird anhand der nachstehenden Beispiele näher erläutert.

Allgemeine Angaben: Herstellung und Handhabung organometallischer Verbindungen erfolgten unter Ausschluß von Luft und Feuchtigkeit unter Argon-Schutz (Schlenk-Technik). Alle benötigten Lösungsmittel wurden vor Gebrauch durch mehrstündiges Sieden über einem geeigneten Trockenmittel und anschließende Destillation unter Argon absolutiert.

Die Synthese spezieller Fulven-Metallkomplexe der Formel (I) nach dem thermischen Verfahren erfolgte in Anlehnung an T. J. Marks et al., *Organometallics* **6** (1987) 232-241.

Abkürzungen:
- Cp*: : C₅(CH₃)₅
- Fv*: : C₅(CH₃)₄=CH₂
- Ph: : C₆H₅
- HV: : Hochvakuum
- THF: : Tetrahydrofuran
- RT: : Raumtemperatur ≙ 25°C
- MS: : Massenspektrum
- de: : Diastereomer Excess

### Beispiel 1

### Synthese von Bis(h⁵-pentamethylcyclopentadienyl)zirconiumdiphenyl, [Cp*₂ZrPh₂], Verbindung 1

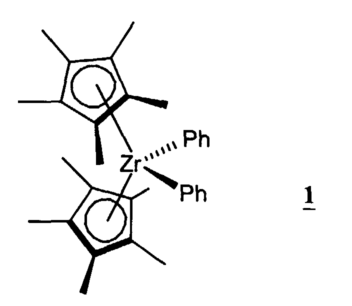

Man suspendierte 3.62 g (8.37 mmol) Bis(*h*⁵-pentamethylcyclopentadienyl)zirconiumdichlorid in 60 ml Diethylether, kühlte die erhaltene Suspension auf -78°C und tropfte 13.90 ml (25.0 mmol) PhLi zu. Anschließend ließ man auf RT erwärmen und rührte über Nacht. Die Suspension wurde im HV zur Trockne eingeengt und der Rückstand in 40 ml Hexan aufgenommen. Diese Suspension wurde filtriert und die resultierende Lösung zur Hälfte eingeengt, wobei ein weißer Feststoff ausfiel. Zum weiteren Kristallisieren kühlte man die Suspension auf -20°C. Die Lösung wurde dekantiert und das verbleibende Produkt im HV getrocknet. Man erhielt 2.94 g (68 %) Cp*₂ZrPh₂.

### Beispiel 2

### Synthese von h⁶-(2,3,4,5-Tetramethylcyclopentadienyl-1-methylen)(h⁵-pentamethylcyclopentadienyl)phenylzirconium, [Cp*Fv*ZrPh], Verbindung 2

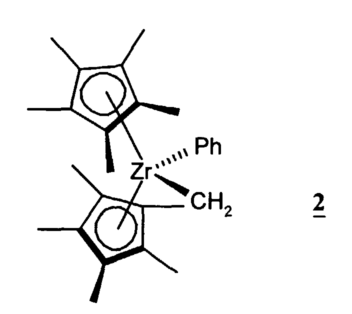

4.20 g (8.14 mmol) Cp*₂ZrPh₂ gemäß Beispiel 1 hergestellt, wurden in 20 ml Toluol gelöst. Die gelbe Lösung wurde 6 h lang auf 110°C erhitzt, wobei und nach dem Abkühlen wurde das Lösungsmittel im HV entfernt. Der Rückstand wurde in wenig Hexan aufgenommen und bei -20°C kristallisiert. Man dekantierte die Mutterlauge und trocknete die Kristalle im HV. Es wurden 2.56 g (72 %) Cp*Fv*ZrPh (Verbindung **2)** als roter kristalliner Feststoff erhalten.
¹H-NMR (300 MHz, C₆D₆): δ = 0.93, 1.49, 1.66, 1.76 (s, 3H, C₅(CH₃)₄=CH₂), 1.70 (s, 15H, C₅(CH₃)₅), 2.09, 2.21 (d, 1H, ³J(H,H) = 6.7 Hz, C₅(CH₃)₄=CH₂), 6.00 (d, 1H, ³J(H,H) = 7.4 Hz, o-C₆H₅), 6.99-7.18 (m, 4H, C₆H₅) ppm.
¹³C-NMR (75 MHz, C₆D₆): δ = 10.48, 10.49, 11.92, 13.38 (C₅(CH₃)₄=CH₂), 11.46 (C₅(CH₃)₅), 63.53 (C₅(CH₃)₄=CH₂), 118.13 (C₅(CH₃)₅), 117.68, 119.49, 121.66, 125.56, 128.99 (C₅(CH₃)₄=CH₂), 123.09, 125.28, 125.82, 127.02, 134.32, 194.20 (C₆H₅) ppm.

### Beispiel 3

### Reaktion von Cp*Fv*ZrPh mit Formaldehyd zu Verbindung 3

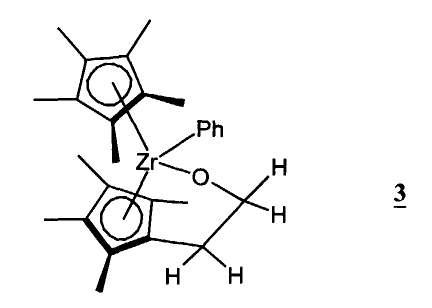

Eine Lösung von Cp*Fv*ZrPh aus Beispiel 2 (0.080 g, 0.18 mmol) in 10 ml Hexan wurde bei Raumtemperatur mit Paraformaldehyd (0.054 g, 1.83 mmol) versetzt und über Nacht gerührt. Nach Abfiltration des nicht umgesetzten Paraformaldehyds wurde die klare Lösung zur Trockne eingeengt. Man erhielt ein weißgelbes Pulver, daß NMR- und massen-spektroskopisch charakterisiert wurde (Ausbeute: 61 % Verbindung **3**).
¹H-NMR (300 MHz, C₆D₆): δ = 1.41, 1.61 (s, 3H, C₅(CH₃)₄-CH₂), 1.74 (s, 15H, C₅(CH₃)₅), 1.75, 1.93 (s, 3H, C₅(CH₃)₄-CH₂), 2.42 (ddd, 1H, ³J(H,H) = 4.40 Hz, ³J(H,H) = 7.39 Hz, ²J(H,H) = 13.43 Hz, C₅(CH₃)₄-CHH), 2.47 (ddd, 1H, ³J(H,H) = 7.39 Hz, ³J(H,H) = 7.72 Hz, ²J(H,H) = 13.43 Hz, C₅(CH₃)₄-CHH), 4.80 (ddd, 1H, ³J(H,H) = 4.40 Hz, ³J(H,H) = 7.39 Hz, ²J(H,H) = 10.41 Hz, OCHHCH₂), 5.04 (ddd, 1H, ³J(H,H) = 7.39 Hz, ³J(H,H) = 7.72 Hz, ²J(H,H) = 10.41 Hz, OCHHCH₂), 7.05-7.53 (m, 5 H, Zr-C₆H₅) ppm.
¹³C-NMR (75 MHz, C₆D₆): δ = 10.15, 10.95, 11.17 (C₅(CH₃)₄-CH₂), 11.33 (C₅(CH₃)₅), 11.77 (C₅(CH₃)₄-CH₂), 28.23 (C₅(CH₃)₄-CH₂), 82.44 (OCH₂CH₂), 113.70, 114.57, 115.28 (C₅(CH₃)₄-CH₂), 118.48 (C₅(CH₃)₅), 122.66 (C₅(CH₃)₄-CH₂), 124.43, 125.98, 127.22 (Zr-C₆H₅), 134.72 (C₅(CH₃)₄-CH₂), 137.20, 139.43 (Zr-C₆H₅), 190.51 (Zr- ipso-C₆H₅) ppm.
MS (70eV) m/e (%): 468 (3) [M⁺], 452 (18) [M⁺-CH₃], 389 (22) [M⁺-Ph], 359 (2), 240 (10), 135 (5) [Cp*], 78 (15) [Ph].

### Beispiel 4

### Reaktion von Cp*Fv*ZrPh mit Acetaldehyd zu Verbindung 4

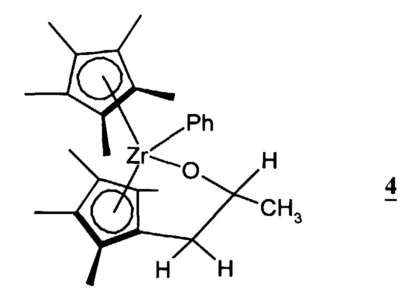

In 10 ml Hexan wurde eine rote Lösung von Cp*Fv*ZrPh aus Beispiel 2 (0.130 g, 0.30 mmol) bei Raumtemperatur mit 1,2 Äquivalenten Acetaldehyd (0.016 g, 0.36 mmol) umgesetzt und 2 Stunden gerührt. Anschließend wurde im HV bis zur Trockne eingeengt, wobei ein weißer Feststoff erhalten wurde, der NMR- und massenspektroskopisch charakterisiert wurde (100 % Umsatz zu Verbindung **4**).
¹H-NMR (300 MHz, C₆D₆): δ = 1.28 (s, 3H, ³J(H,H) = 6.04 Hz, -OC(H)(CH₃)), 1.39, 1.64 (s, 3H, C₅(CH₃)₄-CH₂), 1.73 (s, 15H, C₅(CH₃)₅), 1.75, 1.92 (s, 3H, C₅(CH₃)₄-CH₂), 2.33 (dd, 1H, ³J(H,H) = 9.10 Hz, ²J(H,H) = 13.76 Hz, C₅(CH₃)₄-CHH), 2.47 (dd, 1H, ³J(H,H) = 6.10 Hz, ²J(H,H) = 13.76 Hz, C₅(CH₃)₄-CHH), 5.14 (qdd, 1H, ³J(H,H) = 6.04 Hz, ³J(H,H) = 6.10 Hz, ³J(H,H) = 9.10 Hz, -OC(H)(CH₃)), 7.05-7.32 (m, 4 H, Zr-C₆H₅), 7.63 (m, 1H, Zr-p-C₆H₅) ppm.
¹³C-NMR (75 MHz, C₆D₆): δ = 9.90, 10.99 (C₅(CH₃)₄-CH₂), 11.16 (C₅(CH₃)₅), 11.17, 12.24 (C₅(CH₃)₄-CH₂), 26.40 (-OC(H)(CH₃), 36.19 (C₅(CH₃)₄-CH₂), 90.62 (-OC(H)(CH₃)CH₂), 112.67, 113.92, 115.11 (C₅(CH₃)₄-CH₂), 118.17 (C₅(CH₃)₅), 123.61 (C₅(CH₃)₄-CH₂), 124.50, 126.09, 127.33 (Zr-C₆H₅), 133.98 (C₅(CH₃)₄-CH₂), 136.52, 140.08 (Zr-C₆H₅), 192.39 (Zr- ipso-C₆H₅) ppm.
MS (70eV) m/e (%): 480 (5) [M⁺], 465 (18) [M⁺-CH₃], 403 (20) [M⁺-Ph], 377 (2), 241 (5), 135 (30) [Cp*], 78 (15) [Ph].

### Beispiel 5

### Reaktion von Cp*Fv*ZrPh mit Benzaldehyd zu Verbindung 5

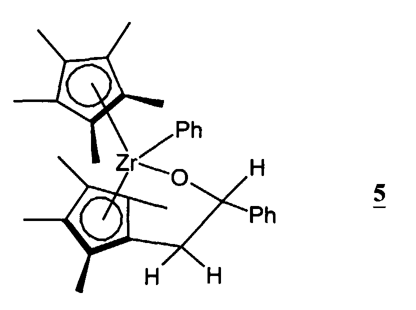

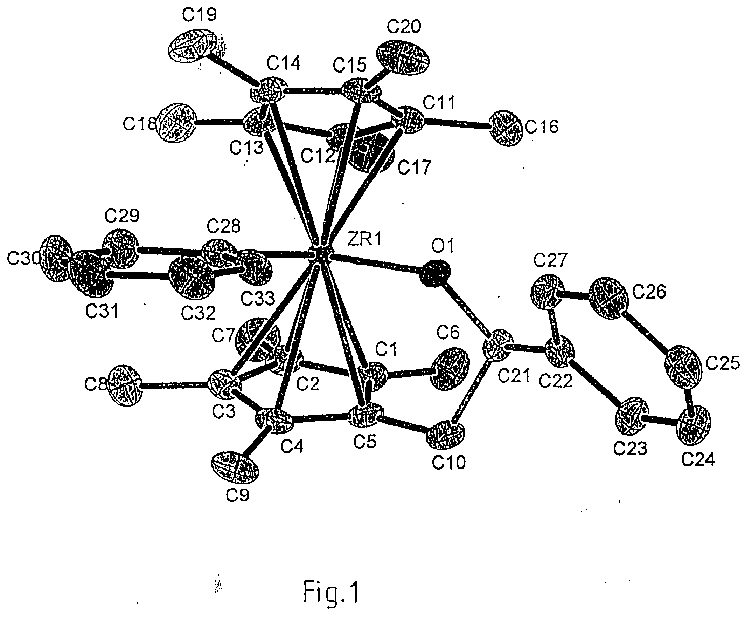

Bei Raumtemperatur wurde eine Lösung von Cp*Fv*ZrPh aus Beispiel 2 (0.145 g, 0.33 mmol) in 15 ml Hexan mit Benzaldehyd (0.035 g, 0.33 mmol) versetzt und 15 Minuten bei RT gerührt. Nach Entfernen des Lösungsmittels im HV wurden 0,170 g (95%) Verbindung **5** als gelber Feststoff erhalten, der NMR- und massenspektroskopisch charakterisiert wurde.
de: > 98%.
Von Verbindung **5** wurde eine Röntgenstrukturanalyse durchgeführt (Fig. 1).
¹H-NMR (300 MHz, C₆D₆): δ = 1.30, 1.63 (s, 3H, C₅(CH₃)₄-CH₂), 1.73 (s, 15H, C₅(CH₃)₅), 1.76, 2.02 (s, 3H, C₅(CH₃)₄-CH₂), 2.69 (dd, 1H, ³J(H,H) = 10.41 Hz, ²J(H,H) = 13.76 Hz, C₅(CH₃)₄-CHH), 2.89 (dd, 1H, ³J(H,H) = 6.04 Hz, ²J(H,H) = 13.76 Hz, C₅(CH₃)₄-CHH), 6.11 (dd, 1H, ³J(H,H) = 6.04 Hz, ³J(H,H) = 10.41 Hz, -OC(H)(C₆H₅)), 7.05-7.75 (m, 10 H, Zr-C₆H₅/ -OC(H)(C₆H₅)) ppm.
¹³C-NMR (75 MHz, C₆D₆): δ = 10.18, 11.07 (C₅(CH₃)₄-CH₂), 11.28 (C₅(CH₃)₅), 11.49, 12.31 (C₅(CH₃)₄-CH₂), 36.77 (C₅(CH₃)₄-CH₂), 95.80 (-OC(H)(C₆H₅)CH₂), 112.83, 115.22, 115.50 (C₅(CH₃)₄-CH₂), 118.69 (C₅(CH₃)₅), 124.18 (C₅(CH₃)₄-CH₂), 124.74, 125.21 (-OC(H)(m,p-C₆H,)CH₂), 126.26, 126.86, 127.70 (Zr-C₆H₅), 128.68 (-OC(H)(o-C₆H₅)CH₂), 133.09 (C₅(CH₃)₄-CH₂), 136.61, 139.14 (Zr-C₆H₅), 148.52 (-OC(H)(ipso-C₆H)CH₂), 192.35 (Zr-ipso-C₆H₅) ppm.
MS (70eV) m/e (%): 542 (5) [M⁺], 527 (20) [M⁺-CH₃ ], 465 (15) [M⁺-Ph], 379 (5), 241 (8), 135 (10) [Cp*], 78 (10) [Ph].

### Beispiel 6

### Reaktion von Cp*Fv*ZrPh mit Pivalinaldehyd zu Verbindung 6

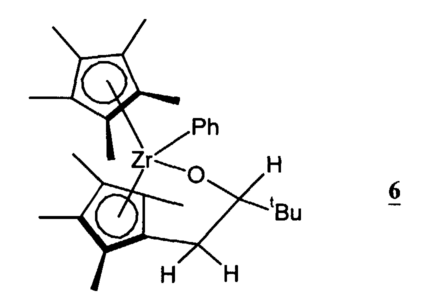

Bei Raumtemperatur wurde eine Lösung von Cp*Fv*ZrPh aus Beispiel 2 (0.125 g, 0.29 mmol) in 15 ml Hexan bei Raumtemperatur mit Pivalinaldehyd (0.025 g, 0.29 mmol ) wurde sofort eine hellgelbe Lösung erhalten. Diese Lösung wurde nach 15 Minuten bis zur Trockne eingeengt, wodurch ein gelber Feststoff erhalten wurde, der NMR-und massenspektroskopisch charakterisiert wurde (100 % Umsatz zu Verbindung **6**).
¹H-NMR (300 MHz, C₆D₆): δ = 1.03 (s, 9H, -OC(H)(C(CH₃)₃), 1.41, 1.67, 1.69 (s, 3H, C₅(CH₃)₄-CH₂), 1.72 (s, 15H, C₅(CH₃)₅), 1.98 (s, 3H, C₅(CH₃)₄-CH₂), 2.38 (dd, 1H, ³J(H,H) = 6.05 Hz, ²J(H,H) = 13.43 Hz, C₅(CH₃)₄-CHH), 2.56 (dd, 1H, ³J(H,H) = 10.74 Hz, ²J(H,H) = 13.43 Hz, C₅(CH₃)₄-CHH), 4.69 (dd, 1H, ³J(H,H) = 6.05 Hz, ³J(H,H) = 10.74 Hz, OC(H)(C(CH₃)₃), 7.14 (m, 2H, Zr-o-C₆H₅), 7.28 (m, 2H, Zr-m-C₆H₅), 7.61 (m, 1H, Zr-p-C₆H₅) ppm.
¹³C-NMR (75 MHz, C₆D₆): δ = 9.95, 11.01 (C₅(CH₃)₄-CH₂), 11.20 (C₅(CH₃)₅), 11.79, 12.38 (C₅(CH₃)₄-CH₂), 26.84 (C(CH₃)₃), 28.91 (C(CH₃)₃), 37.33 (C₅(CH₃)₄-CH₂), 104.28 (-OC(H)(C(CH₃)₃)CH₂), 112.69, 114.99, 115.57 (C₅(CH₃)₄-CH₂), 118.39 (C₅(CH₃)₅), 122.76 (C₅(CH₃)₄-CH₂), 124.65, 126.25, 127.35 (Zr-C₆H₅), 134.16 (C₅(CH₃)₄-CH₂), 136.62, 138.81 (Zr-C₆H₅), 191.81 (Zr-ipso-C₆H₅) ppm.
MS (70eV) m/e (%): 522 (12) [M⁺], 507 (85) [M⁺-CH₃ ], 465 [M⁺-^{t}Bu], 445 (80) [M⁺-Ph], 360 (10), 223 (20), 135 (100) [Cp*], 78 (70) [Ph].

### Beispiel 7

### Reaktion von Cp*Fv*ZrPh mit Aceton zu Verbindung 7

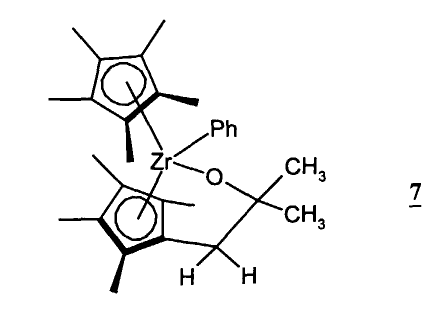

Eine Lösung von Cp*Fv*ZrPh aus Beispiel 2 (0.230 g, 0.52 mmol) in 20 ml Hexan wurde bei Raumtemperatur mit 1.2 Äquivalenten Aceton (0.037 g, 6.30 mmol) versetzt und über Nacht gerührt. Es wurde anschließend im HV zur Trockne eingeengt, wobei ein weißer Feststoff erhalten werden konnte, der NMR- und massenspektroskopisch charakterisiert wurde (100 % Umsatz zu Verbindung **7**).
¹H-NMR (300 MHz, C₆D₆): δ = = 1.37 (s, 3H, -OC(CH₃)₂), 1.42, 1.62 (s, 3H, C₅(CH₃)₄-CH₂), 1.72 (s, 3H, -OC(CH₃)₂), 1.81, 1.85 (s, 3H, C₅(CH₃)₄-CH₂), 1.87 (s, 15H, C₅(CH₃)₅), 2.27 (d, 1H, ²J(H,H) = 13.80 Hz, C₅(CH₃)₄-CHH), 2.42 (d, 1H, ²J(H,H) = 13.80 Hz, C₅(CH₃)₄-CHH), 7.12-7.28 (m, 3 H, Zr- m,p-C₆H₅), 7.65 (m, 2H, Zr-o-C₆H₅) ppm.
¹³C-NMR (75 MHz, C₆D₆): δ = 11.84 (C₅(CH₃)₅), 13.11, 15.10, 15.74, 17.10 (C₅(CH₃)₄-CH₂), 32.63, 36.16 (-OC(CH₃)₂), 38.89 (C₅(CH₃)₄-CH₂), 112.13, 114.04, 115.13 (C₅(CH₃)₄-CH₂), 119.82 (C₅(CH₃)₅), 123.07 (C₅(CH₃)₄-CH₂), 126.65, 127.12 (Zr-C₆H₅), 134.28 (C₅(CH₃)₄-CH₂), 138.52 (Zr-C₆H₅), 184.20 (Zr- ipso-C₆H₅) ppm.
MS (70eV) m/e (%): 494 (2) [M⁺], 479 (5) [M⁺-CH₃ ], 417 (20) [M⁺-Ph], 359 (6), 241 (10), 135 (10) [Cp*], 78 (50) [Ph].

### Beispiel 8

### Reaktion von Cp*Fv*ZrPh mit Acetophenon zu Verbindung 8

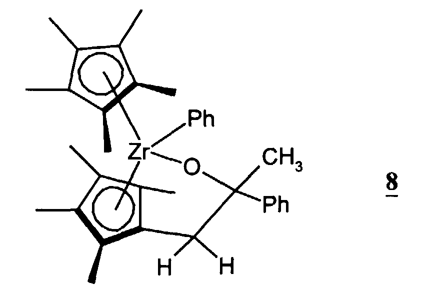

Bei Raumtemperatur wurde eine Lösung von Cp*Fv*ZrPh aus Beispiel 2 (0.130 g, 0.30 mmol) in 10 ml Hexan mit Acetophenon (0.036 g, 0.30 mmol) versetzt. Die Lösung wurde 1 Stunde bei RT gerührt. Durch Abdestillieren des Lösungsmittels im HV konnte ein blaßgelbes Öl erhalten werden. Umkristallisation aus Pentan lieferte 142 mg eines gelben Feststoffs, der NMR- und massenspektroskopisch charakterisiert wurde.(Ausbeute: 86 % Verbindung **8**).
¹H-NMR (300 MHz, C₆D₆): δ = 1.15, 1.55, 1.58, 1.75 (s, 3H, C₅(CH₃)₄-CH₂), 1.78 (s, 15H, C₅(CH₃)₅), 2.14 (s, 3H, -OC(CH₃)(C₆H₅)), 2.90 (d, 1H, ²J(H,H) = 13.76 Hz, C₅(CH₃)₄-CHH), 3.44 (d, 1H, ²J(H,H) = 13.76 Hz, C₅(CH₃)₄-CHH), 7.00-7.76 (m, 10 H, Zr-C₆H₅/ -OC(CH₃)(C₆H₅)) ppm.
¹³C-NMR (75 MHz, C₆D₆): δ = 11.09, 11.53 (C₅(CH₃)₄-CH₂), 11.65 (C₅(CH₃)₅), 12.20, 12.68 (C₅(CH₃)₄-CH₂), 39.48 (C₅(CH₃)₄-CH₂), 40.70 (-OC(CH₃)(C₆H₅), 105.12 (-OC(CH₃)(C₆H₅)CH₂), 113.16, 114.79, 119.20 (C₅(CH₃)₄-CH₂), 118.78 (C₅(CH₃)₅), 122.45 (C₅(CH₃)₄-CH₂), 124.36 (Zr-C₆H₅), 125.12 (-OC(CH₃)(m-C₆H₅)CH₂), 125.67, 126.43 (Zr-C₆H₅), 127.35, 128.57 (-OC(CH₃)(o,p-C₆H₅)CH₂), 134.41 (C₅(CH₃)₄-CH₂), 136.93, 139.07 (Zr-C₆H₅), 153.65 (-OC(CH₃)(ipso-C₆H₅)CH₂), 190.65 (Zr-ipso-C₆H₅) ppm.
MS (70eV) m/e (%): 556 (8) [M⁺], 541 (20) [M⁺-CH₃ ], 479 (12) [M⁺-Ph], 377 (5), 221 (25), 135 (50) [Cp*], 105 (55), 78 (5) [Ph].

### Beispiel 9

### Reaktion von Cp*Fv*ZrPh mit Benzophenon zu Verbindung 9

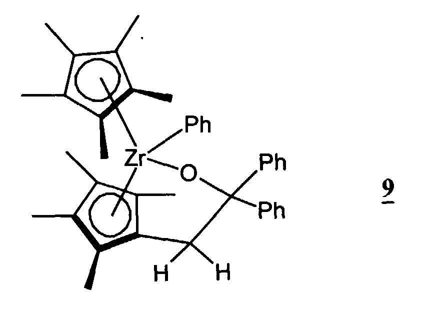

Bei Raumtemperatur wurde eine Lösung von Cp*Fv*ZrPh aus Beispiel 2 (0.180 g, 0.41 mmol) in 20 ml Hexan bei Raumtemperatur mit Benzophenon (0.075 g, 0.41 mmol) vermischt und die Lösung nach 15 Minuten bis zur Trockene eingeengt. Man erhielt einen gelben Feststoff, der NMR- und massenspektroskopisch charakterisiert wurde (100 % Umsatz zu Verbindung **9**).
¹H-NMR (300 MHz, C₆D₆): δ = 1.24, 1.58 (s, 3H, C₅(CH₃)₄-CH₂), 1.68 (s, 15H, C₅(CH₃)₅), 1.73, 1.81 (s, 3H, C₅(CH₃)₄-CH₂), 3.62 (d, 1H, ²J(H,H) = 14.10 Hz, C₅(CH₃)₄-CHH), 3.84 (d, 1H, ²J(H,H) = 14.10 Hz, C₅(CH₃)₄-CHH), 7.05-7.26 (m, 13 H, Zr-C₆H₅/ -OC(C₆H₅)₂), 7.67 (m, 2H, -OC(C₆H₅)₂) ppm.
¹³C-NMR (75 MHz, C₆D₆): δ = 9.60, 10.08 (C₅(CH₃)₄-CH₂), 10.31 (C₅(CH₃)₅), 10.78, 11.29 (C₅(CH₃)₄-CH₂), 36.82 (C₅(CH₃)₄-CH₂), 105.94 (-OC(C₆H₅)₂), 112.36, 114.66, 119.29 (C₅(CH₃)₄-CH₂), 117.14 (C₅(CH₃)₅), 121.87 (C₅(CH₃)₄-CH₂), 124.36, 124.55 (-OC(C₆H₅)₂), 126.07, 126.50, 126.63 (Zr-C₆H₅), 126.93, 127.22, 128.80, 128.96 (-OC(C₆H₅)₂), 132.04 (C₅(CH₃)₄-CH₂), 134.87, 136.83 (Zr-C₆H₅), 151.12, 152.54 (-OC(ipso-C₆H₅)₂), 189.22 (Zr-ipso-C₆H₅) ppm.
MS (70eV) m/e (%): 619 (1) [M⁺], 603 (5) [M⁺-CH₃ ], 541 (2) [M⁺-Ph], 526 (6) [M⁺-Ph-CH₃], 377 (15), 439 (10), 241 (12), 182 (65) [Ph₂CO], 15 (100) [PhCO], 105 (55), 78 (70) [Ph].

### Beispiel 10

### Reaktion von Cp*Fv*ZrPh mit Essigsäureethylester zu Verbindung 10

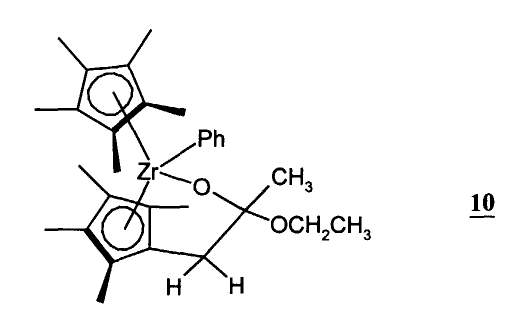

Bei Raumtemperatur wurde eine Lösung von Cp*Fv*ZrPh aus Beispiel 2 (0.140 g, 0.32 mmol) in 10 ml Hexan mit Essigsäureethylester (0.028 g, 0.32 mmol) versetzt und über Nacht bei RT gerührt. Nach Entfernen des Lösungsmittels im HV wurde ein gelber Feststoff erhalten, der NMR- und massenspektroskopisch charakterisiert wurde (100 % Umsatz zu Verbindung **10**).
¹H-NMR (300 MHz, C₆D₆): δ = 1.37 (t, 3H, ³J(H,H) = 7.05 Hz, -OCH₂CH₃), 1.44, 1.61, 1.66 (s, 3H, C₅(CH₃)₄-CH₂), 1.71 (s, 15H, C₅(CH₃)₅), 1.73 (s, 3H, C₅(CH₃)₄-CH₂), 1.94 (s, 1H, (OC(CH₃)(OC₂H₅), 2.70 (d, 1H, ²J(H,H) = 14.10 Hz, C₅(CH₃)₄-CHH), 3.17 (d, 1H, ²J(H,H) = 14.10 Hz, C₅(CH₃)₄-CHH), 3.52 (qd, 1H, ²J(H,H) = 1.68 Hz, ³J(H,H) = 7.05 Hz, -OCHHCH₃), 3.73 (qd, 1H, ²J(H,H) = 1.34 Hz, ³J(H,H) = 7.05 Hz, -OCHHCH₃),7.05 (d, 1 H, ³J(H,H) = 7.05 Hz, Zr-C₆H₅), 7.18-7.34 (m, 3 H, Zr-C₆H₅), 7.52 (m, 1H, Zr-C₆H₅) ppm.
¹³C-NMR (75 MHz, C₆D₆): δ = 10.54, 10.95 (C₅(CH₃)₄-CH₂), 11.37 (C₅(CH₃)₅), 11.72, 12.56 (C₅(CH₃)₄-CH₂), 15.94 (-OCH₂CH₃), 29.68 (OC(CH₃)(OC₂H₅), 41.11 (C₅(CH₃)₄-CH₂), 56.99 (-OCH₂CH₃), 113.67, 114.69, 117.22 (C₅(CH₃)₄-CH₂), 118.70 (C₅(CH₃)₅), 123.67 (C₅(CH₃)₄-CH₂), 124.66, 125.42 (Zr-C₆H₅), 125.72 (OC(CH₃)(OC₂H₅), 127.16 (Zr-C₆H₅), 132.57 (C₅(CH₃)₄-CH₂), 136.68, 138.32 (Zr-C₆H₅), 191.92 (Zr- ipso-C₆H₅) ppm.
MS (70eV) m/e (%):478 (15) [M⁺-OCH₂CH₃ ], 463 (100) [M⁺-OCH₂CH₃-CH₃], 401 (85) [M⁺-OCH₂CH₃-Ph], 359 (5), 223 (12), 135 (10) [Cp*], 78 (20) [Ph].

### Beispiel 11

### Reaktion von Cp*Fv*ZrPh mit Cyclohexylisocyanat zu Verbindung 11

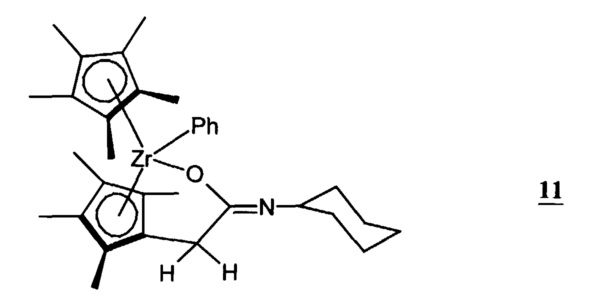

In 10 ml Hexan wurde eine Lösung von Cp*Fv*ZrPh aus Beispiel 2 (0.145 g, 0.33 mmol) bei Raumtemperatur mit Cyclohexylisocyanat (0.042 g, 0.33 mmol) umgesetzt und 2 Stunden gerührt. Anschließend wurde im HV bis zur Trockene eingeengt, wobei ein gelber Feststoff erhalten wurde, der NMR- und massenspektroskopisch charakterisiert wurde (Umsatz 100 % zu Verbindung **11**).
¹H-NMR (300 MHz, C₆D₆): δ = 0.87 (m, 4H, C₆H₁₁), 1.04 (m, 2H, C₆H₁₁), 1.23 (s, 3H, C₅(CH₃)₄-CH₂), 1.36 (m, 4H, C₆H₁₁), 1.50, 1.68 (s, 3H, C₅(CH₃)₄-CH₂), 1.69 (s, 15H, C₅(CH₃)₅), 1.71 (s, 3H, C₅(CH₃)₄-CH₂), 3.35 (d, 1H, ²J(H,H) = 17.10 Hz, C₅(CH₃)₄-CHH), 3.50 (d, 1H, ²J(H,H) = 17.10 Hz, C₅(CH₃)₄-CHH), 3.99 (m, 1H, C₆H₁₁), 6.87 (d, 1 H, Zr-C₆H₅), 7.15 (m, 4 H, Zr-C₆H₅) ppm.
¹³C-NMR (75 MHz, C₆D₆): δ = 8.27, 9.43 (C₅(CH₃)₄-CH₂), 9.71 (C₅(CH₃)₅), 9.99, 10.21 (C₅(CH₃)₄-CH₂), 24.39, 24.56, 25.31, 33.93, 34.39 (C₆H₁₁), 34.67 (C₅(CH₃)₄-CH₂), 54.21 (ipso-C₆H₁₁), 113.87, 114.78, 116.48 (C₅(CH₃)₄-CH₂), 118.62 (C₅(CH₃)₅), 123.18 (C₅(CH₃)₄-CH₂), 123.61, 125.16, 126.45 (Zr-C₆H₅), 133.40 (C₅(CH₃)₄-CH₂), 134.62, 135.20 (Zr-C₆H₅), 170.63 (-OC=NCy), 191.38 (Zr- ipso-C₆H₅) ppm.
MS (70eV) m/e (%): 561 (5) [M⁺], 484 (3) [M⁺-Ph], 377 (12) [M⁺-C₆H₁₁NC-Ph], 261 (50), 135 (100) [Cp*], 78 (12) [Ph]

### Beispiel 12

### Polymerisation von Ethylen

In einen 250 ml Glasreaktor wurden 100 ml Toluol vorgelegt und 1 ml einer 0,1 molaren Lösung von Triisobutylaluminium in Toluol vorgelegt. Dann wurde eine Lösung von 5,6 mg der Verbindung **11** aus Beispiel 11 in 5 ml Toluol zugegeben. Anschließend wurde mit einem Gaseinleitungsrohr kontinuierlich bei einem Druck von 1,1 bar Ethylen in die Lösung eingeleitet und 5 min bei 40°C gerührt. Die Polymerisation wurde durch Zugabe von 2 ml einer 0,005 molaren Lösung von Triphenylmethyl-tetrakis(pentafluorphenyl)borat in Toluol gestartet. Nach 5 min Polymerisationsdauer bei einer Temperatur von 40°C und einem Ethylendruck von 1,1 bar wurde die Reaktion durch Zugabe von 10 ml Methanol abgestoppt, das entstandene Polymer abfiltriert, mit Aceton gewaschen und im Vakuumtrockenschrank getrocknet. Es wurden 1,2 g Polyethylen erhalten.

### Beispiel 13

### Reaktion von Cp*Fv*ZrPh mit Methylisothiocyanat zu Verbindung 12

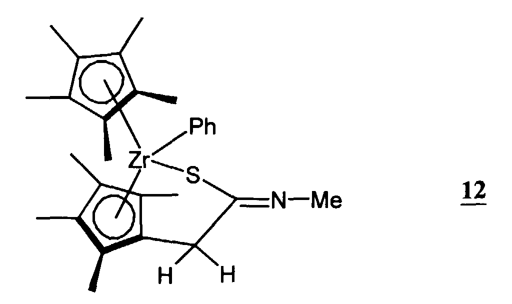

Bei Raumtemperatur wurde eine Lösung von Cp*Fv*ZrPh aus Beispiel 2 (0.130 g, 0.30 mmol) in 10 ml Hexan mit Methylisothiocyanat (0.022 g, 0.30 mmol) versetzt und 15 Minuten bei RT gerührt. Nach Entfernen des Lösungsmittels im HV wurde ein blaßgelber Feststoff erhalten, der NMR- und massenspektroskopisch charakterisiert wurde (100 % Umsatz zu Verbindung **12**).
¹H-NMR (300 MHz, C₆D₆): δ = 1.26, 1.56, 1.59, 1.70 (s, 3H, C₅(CH₃)₄-CH₂), 1.72 (s, 15H, C₅(CH₃)₅), 3.36 (d, 3H, ⁴J(H,H) = 1.6 Hz, -SC=N-CH₃), 3.66 (dq, 1H, ²J(H,H) = 15.80 Hz, ⁴J(H,H) = 1.6 Hz, C₅(CH₃)₄-CHH), 3.90 (d, 1H, ²J(H,H) = 15.80 Hz, C₅(CH₃)₄-CHH), 6.61 (m, 1 H, Zr-C₆H₅), 7.03 (m, 3 H, Zr-C₆H₅) 7.33 (m, 1H, Zr-C₆H₅) ppm.
¹³C-NMR (75 MHz, C₆D₆): δ = 11.26, 11.35, 11.47 (C₅(CH₃)₄-CH₂), 11.86 (C₅(CH₃)₅), 12.42 (C₅(CH₃)₄-CH₂), 32.77 (-SC=N-CH₃), 41.31 (C₅(CH₃)₄-CH₂), 116.31, 117.23, 118.97 (C₅(CH₃)₄-CH₂), 120.59 (C₅(CH₃)₅), 120.78 (C₅(CH₃)₄-CH₂), 121.97, 124.97, 126.56 (Zr-C₆H₅), 131.34 (C₅(CH₃)₄-CH₂), 135.21, 140.45 (Zr-C₆H₅), 183.31 (-SC=NCH₃), 196.29 (Zr-ipso-C₆H₅) ppm.
MS (70eV) m/e (%): 509 (10) [M⁺], 494 (20) [M⁺-CH₃], 432 (15) [M⁺-Ph], 359 (10), 135 (10) [Cp*], 78 (8) [Ph], 73 (100) [SCN-CH₃]

### Beispiel 14

### Reaktion von Cp*Fv*ZrPh mit Pivalinsäurenitril zu Verbindung 13

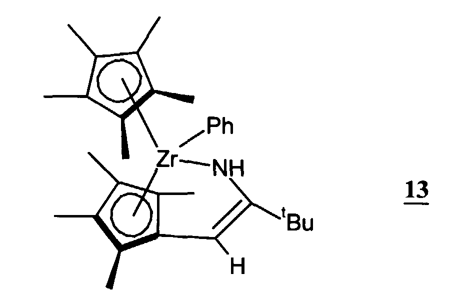

Zu einer Lösung von Cp*Fv*ZrPh aus Beispiel 2 (0.94 g, 2,14 mmol) in 60 ml Hexan wurde bei Raumtemperatur Pivalinsäurenitril (0.25 ml, 2,26 mmol) unter Rühren getropft. Diese Lösung wurde eine Woche bei Raumtemperatur aufbewahrt und anschließend bis zur Trockene eingeengt, wodurch ein gelber Feststoff erhalten wurde, der NMR-spektroskopisch charakterisiert wurde (95 % Umsatz zu Verbindung **13**).
¹H-NMR (500 MHz, C₆D₆): δ = 1.19 (s,9H,t-Bu),1.47 (s,3H,CH₃), (s, 3H, C₅(CH₃)₄-CH₂), 1.69 (s, 15H, C₅(CH₃)₅), 1.90, 1.80, 1.74 (s, 3H, CH₃) , 4.85 (d, ⁴J(H,H) = 2 Hz, 1H, C₅(CH₃)₄-CH), 6.68-6.60 (m,1H, NH), 7.00 (dm, ³J(H,H) = 7 Hz, 1H,o-Harom), 7.13 (tt, ³J(H,H) = 7 Hz, ⁴J(H,H) = 2 Hz, 1 H, p-Harom.), 7.23 (tm, 2H, ³J(H,H) = 7 Hz, 1H,m-Harom.), 7.26 (tm, 2H, ³J(H,H) = 7 Hz, 1H, m-Harom.), 7.32 (dm, 2H, ³J(H,H) = 7 Hz, 1H,o-Harom), ppm.
¹³C-NMR (75 MHz, C₆D₆): δ = 9.45 (C₅(CH₃)₄-CH₂), 11.2 (C₅(CH₃)₅), 12.1, 11.7, 11.3 (C₅(CH₃)₄-CH₂), 29.5 (C(CH₃)₃), 34.9 (C(CH₃)₃), 90.9 (C₅(CH₃)₄-CH), 117.0, 113.7 (C₅(CH₃)₄-CH₂), 117.1 C₅(CH₃)₅), 124.2 78 (C₅(CH₃)₄-CH₂) 125.8 (p-Carom.), 127.7, 127.4 (m-Carom.), 132.9 (C₅(CH₃)₄-CH₂), 136.4 (o-Carom.), 138.0 (C₅(CH₃)₄-CH₂), 141.0 (o-Carom.), 174.5 (CN), 192.9 (ipso-Carom.), ppm .

### Beispiel 15

### Polymerisation von Ethylen

In einen 1,4-l-Stahl-Autoklaven wurden 500 ml Toluol, 0,1 ml TIBA und eine Lösung von 2,6 mg der Verbindung **13** aus Beispiel 14 in 2,5 ml Toluol vorgelegt. Diese Lösung wurde auf 40°C temperiert. Anschließend wurde Ethylen zudosiert, bis der Reaktorinnendruck auf 7 bar anstieg. Durch Zugabe einer Lösung von 4,1 mg Triphenylmethyl-tetrakis(pentafluorphenyl)borat in 5 ml Toluol wurde die Polymerisation gestartet. Nach einer Polymerisationsdauer von 15 min bei 40°C und 7 bar wurde der Autoklav entspannt, das Polymere abfiltriert, mit Methanol gewaschen und 20 h im Vakuum bei 60°C getrocknet. Es wurden 7,7 g Polyethylen erhalten.

### Beispiel 16

### Reaktion von Cp*Fv*ZrPh mit 4-Chlorphenylnitril zu Verbindung 14

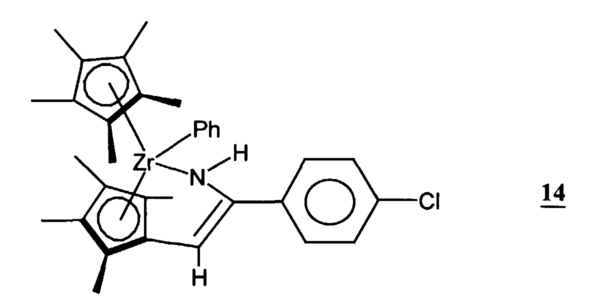

Bei Raumtemperatur wurde eine Lösung von Cp*Fv*ZrPh aus Beispiel 2 (0.430 g, 0.98 mmol) in 25 ml Hexan mit 4-Chlorphenylnitril (0.135 g, 0.98 mmol) umgesetzt und 3 Tage bei Raumtemperatur aufbewahrt und anschließend bis zur Trockene eingeengt, wodurch ein oranger Feststoff erhalten wurde, der NMR- und massenspektroskopisch charakterisiert wurde (100 % Umsatz zu Verbindung **14**).
¹H-NMR (300 MHz, C₆D₆): δ = 1.48 (s, 3H, C₅(CH₃)₄-CH₂), 1.65 (s, 15H, C₅(CH₃)₅), 1.72, 1.77, 1.93 (s, 3H, C₅(CH₃)₄-CH₂), 5.23 (d, 1H, ⁴J(H,H) = 2.35 Hz, -CH=CN-), 6.60 (m, 1H, NH), 6.96-7.38 (m, 5 H, Zr-C₆H₅), 7.14 (d, 2H, ³J(H,H) = 8.3 Hz, C₆H₄Cl), 7.35 (d, 2H, ³J(H,H) = 8.3 Hz, C₆H₄Cl), ppm.
¹³C-NMR (75 MHz, C₆D₆): δ = 9.75, 11.38 (C₅(CH₃)₄-CH₂), 11.44 (C₅(CH₃)₅), 11.84, 12.40 (C₅(CH₃)₄-CH₂), 95.86 (-CH=CN-), 114.40, 117.67 (C₅(CH₃)₄-CH₂), 117.84 (C₅(CH₃)₅), 122.22, 123.37 (C₅(CH₃)₄-CH₂), 124..57, 126.07 (Zr-C₆H₅), 126.90 (C₆H₄Cl), 128.93 (Zr-C₆H₅), 129.04, 133.61 (C₆H₄Cl), 136.39 (Zr-C₆H₅), 137.30 (C₆H₄Cl), 138.78 (C₅(CH₃)₄-CH₂), 141.00 (Zr-C₆H₅), 163.72 (-CH=CN-), 193.26 (Zr-ipso-C₆H₅), ppm.

### Beispiel 17

### Polymerisation von Ethylen

In einen 250 ml Glasreaktor wurden 100 ml Toluol vorgelegt und 1 ml einer 0,1 molaren Lösung von Triisobutylaluminium in Toluol vorgelegt. Dann wurde eine Lösung von 5,8 mg der Verbindung **14** aus Beispiel 16 in 5 ml Toluol zugegeben. Anschließend wurde mit einem Gaseinleitungsrohr kontinuierlich bei einem Druck von 1,1 bar Ethylen in die Lösung eingeleitet und 5 min bei 40°C gerührt. Die Polymerisation wurde durch Zugabe von 2 ml einer 0,005 molaren Lösung von Triphenylmethyl-tetrakis(pentafluorphenyl)borat in Toluol gestartet. Nach 10 min Polymerisationsdauer bei einer Temperatur von 40°C und einem Ethylendruck von 1,1 bar wurde die Reaktion durch Zugabe von 10 ml Methanol abgestoppt, das entstandene Polymer abfiltriert, mit Aceton gewaschen und im Vakuumtrockenschrank getrocknet. Es wurden 2,14 g Polyethylen erhalten.

### Beispiel 18

### Reaktion von Cp*Fv*ZrPh mit (2,6)-Dimethyl-Phenylisonitril zu Verbindung 15

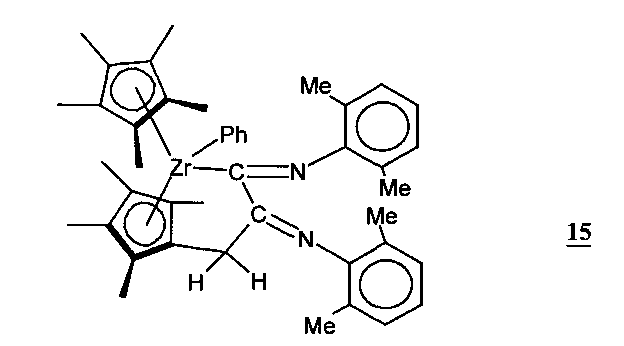

Eine Lösung von Cp*Fv*ZrPh aus Beispiel 2 (0.120 g, 0.27 mmol) in 10 ml Hexan wurde bei Raumtemperatur mit (2,6)-Dimethyl-Phenylisonitril (0.036 g, 0.27 mmol) versetzt und über Nacht gerührt. Die Lösung wurde mit Hilfe einer Spritze abgetrennt und der verbleibende orange Feststoff im HV getrocknet und anschließend NMR-spektroskopisch untersucht. (Ausbeute: 44 % Verbindung **15**).
¹H-NMR (300 MHz, C₆D₆): δ = 1.25, 1.42 (s, 3H, C₅(CH₃)₄-CH₂), 1.56 (s, 3H, -C=N-C₆H₃(CH₃)₂), 1.63, 1.68 (s, 3H, C₅(CH₃)₄-CH₂), 1.80 (s, 15H, C₅(CH₃)₅), 2.24, 2.30, 2.63 (s, 3H, -C=N-C₆H₃(CH₃)₂), 2.82 (d, 1H, ²J(H,H) = 15.70 Hz, C₅(CH₃)₄-CHH), 2.90 (d, 1H, ²J(H,H) = 15.70 Hz, C₅(CH₃)₄-CHH), 6.98-7.24 (m, 9H, Zr-C₆H₅/ -C=N-C₆H₃(CH₃)₂),), 7.84 (m, 2H, -C=N-C₆H₃(CH₃)₂) ppm.
¹³C-NMR (75 MHz, C₆D₆): δ = 10.13, 10.95, 11.70 (C₅(CH₃)₄-CH₂), 11.88 (C₅(CH₃)₅), 13.26 (C₅(CH₃)₄-CH₂), 17.94, 19.53, 20.65, 21.48 (-C=N-C₆H₃(CH₃)₂), 27.30 (C₅(CH₃)₄-CH₂), 113.87, 116.88 (C₅(CH₃)₄-CH₂), 120.66 (C₅(CH₃)₅), 120.95 (C₅(CH₃)₄-CH₂), 122.05, 123.72 (Zr-C₆H₅), 123.91 (C₅(CH₃)₄-CH₂), 125.36 (Zr-C₆H₅), 127.05, 127.63, 128.37, 128.69.128.72 (-C=N-C₆H₃(CH₃)₂), 129.47 (Zr-C₆H₅), 134.67 (C₅(CH₃)₄-CH₂), 135.77 (Zr-C₆H₅), 147.37, 154.84 (-C=N-ipso-C₆H₃(CH₃)₂), 178.28 (-C=N-), 197.38 (Zr-ipso-C₆H₅), 235.17 (Zr-C=N-) ppm.

### Beispiel 19

### Fulvenkomplexsynthese durch Reaktion von 6,6-Dimethylfulven mit Cp*TiCl₃ in Gegenwart von Magnesium [(C₅(CH₃)₅)(C₅H₄)C(CH₃)₂TiCl], Verbindung 16

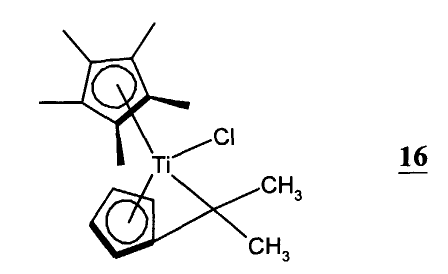

Cp*TiCl₃ (0.610 g, 2.11 mmol) und 1.05 Äquivalente Magnesium (0.054 g, 2.21 mmol) wurden in 25 ml THF vorgelegt. Zu dieser Lösung tropfte man bei Raumtemperatur 1.05 Äquivalente 6,6-Dimethylfulven (0.227 g, 2.14 mmol) zu. Man ließ über Nacht bei RT rühren, so daß alles Mg verbraucht wurde. Man entfernte das Lösungsmittel im HV und nahm den Rückstand in Hexan auf. Man filtrierte das Magnesiumchlorid ab und engte die Lösung zur Hälfte ein, wobei grüne glänzende Plättchen ausfielen. Zum Auskristallisieren kühlte man den Ansatz auf -20°C ab. Die olivgrünen Kristalle wurden isoliert und im HV getrocknet. Man erhielt 0.429 g (59 %) [(C₅(CH₃)₅)(C₅H₄)C(CH₃)₂TiCl].
¹H-NMR:(C₆D₆, 300 MHz): δ = 1.16 (s, 3H, C(CH₃)₂), 1.70 (s, 15 H, C₅(CH₃)₅), 1.75 (s, 3H, C(CH₃)₂), 3.43, 4.65, 6.03, 6.70 (m, 1H, C₅H₄) ppm.
¹³C-NMR:(C₆D₆, 75 MHz): δ = 12.82 (C₅(CH₃)₅), 22.76, 24.50 (C(CH₃)₂), 108.10 (C(CH₃)₂) 117.23, 117.46, 120.04, 124.09 (C₄H₄), 122.55 (C₅(CH₃)₅), 132.16 (ipso-C₅H₄) ppm.
MS (70eV) m/e (%): 324 (40) [M⁺], 288 (40) [M⁺-HCl], 135 (5) [Cp*], 106 (100) [Dimethylfulven].

### Beispiel 20

### Fulvenkomplexsynthese durch Reaktion von 6,6-Dimethylfulven mit Cp*ZrCl₃ in Gegenwart von Magnesium [(C₅(CH₃)₅)(C₅H₄)C(CH₃)₂ZrCl], Verbindung 17

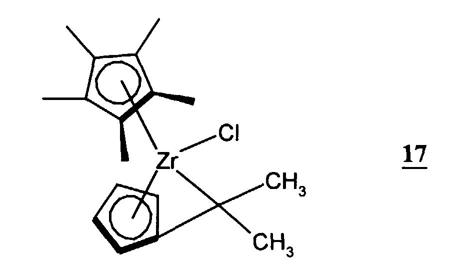

Cp*ZrCl₃ (0.380 g, 1.14 mmol) und 1.1 Äquivalente Magnesium (0.031 g, 1.26 mmol) wurden in 10 ml THF vorgelegt. Zu dieser Lösung tropfte man 1.1 Äquivalente 6,6-Dimethylfulven (0.134 g, 1.26 mmol) zu. Man ließ über Nacht rühren, so daß sich das Magnesium vollständig auflöste. Man engte im HV zur Trockne ein, nahm in 10 ml Hexan auf und filtrierte vom entstandenen Magnesiumchlorid ab. Nach der Trocknung im HV erhielt man 197 mg (47%) [(C₅(CH₃)₅)(C₅H₄)C(CH₃)₂ZrCl] als braunroten Feststoff.
¹H-NMR:(C₆D₆, 300 MHz): δ = 1.77 (s, 15H, C₅(CH₃)₅), 1.98, 1.99 (s, 3H, C(CH₃)₂), 5.40 (dd, 1H, ³J(H,H) = 2.69, 3.02 Hz, C₅H₄), 5.58 (dd, 1H, ³J(H,H) = 2.69, 2.68 Hz, C₅H₄), 5.85 (dd, 1H, ³J(H,H) = 2.68, 3.02 Hz, C₅H₄), 5.92 (dd, 1H, ³J = 2.69, 2.68 Hz, C₅H₄) ppm.
¹³C-NMR:(C₆D₆, 75 MHz): δ = 10.98 (C₅(CH₃)₅), 21.35, 21.90 (C(CH₃)₂), 109.78 (C(CH₃)₂), 107.75,
110.68, 113.88, 118.11 (C₅H₄), 115.69 (ipso-C₅H₄), 122.35 (C₅(CH₃)₅) ppm.
MS (70eV) m/e (%): 366 (10) [M⁺], 330 (5) [M⁺-HCl], 259 (2), 135 (5) [Cp*], 106 (100) [Dimethylfulven].

### Beispiel 21

### Fulvenkomplexsynthese durch Reaktion von 6,6-Dimethylfulven mit CpTiCl₃ in Gegenwart von Magnesium [(C₅H₅)(C₅H₄)C(CH₃)₂TiCl], Verbindung 18

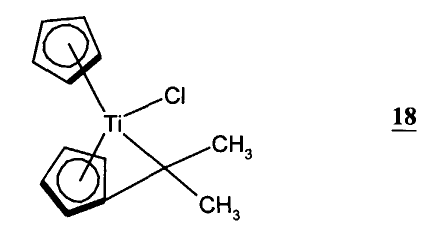

In 20 ml THF wurde CpTiCl₃ (0.410 g, 1.87 mmol) und 1.05 Äquivalente Magnesium (0.048 g, 1.96 mmol) vorgelegt. Zu dieser Lösung tropfte man bei RT 1.03 Äquivalente 6,6-Dimethylfulven (0.204 g, 1.92 mmol). Nach 3 Stunden war das eingesetzte Magnesium verbraucht. Es wurde anschließend im HV eingeengt und in 20 ml Hexan aufgenommen. Nach Abfiltration des Feststoffes wurde die Lösung zur Hälfte im HV eingeengt. Durch Kristallisation bei -20°C wurden 0,2 g (42%) [(C₅H₅)(C₅H₄)C(CH₃)₂TiCl] als dunkelgrüner Feststoff erhalten.
¹H-NMR:(C₆D₆, 300 MHz): δ = 0.94, 1.64 (s, 3H, C(CH₃)₂), 3.66 (m, 1H, C₅H₄), 4.76 (m, 1H, C₅H₄), 5.80 s, 5H, C₅H₅), 6.23 (m, 1H, C₅H₄), 6.66 (m, 1H, C₅H₄) ppm
¹³C-NMR:(C₆D₆, 75 MHz): δ = 10.98 (C₅(CH₃)₅), 21.35, 21.90 (C(CH₃)₂), 109.78 (C(CH₃)₂), 107.75, 110.68, 113.88, 118.11 (C₅H₄), 115.69 (ipso-C₅H₄), 122.35 (C₅(CH₃)₅) ppm.

### Beispiel 23

### Fulvenkomplexsynthese durch Reaktion von 6,6-Diphenylfulven mit Cp*TiCl₃ in Gegenwart von Magnesium [(C₅(CH₃)₅)(C₅H₄)C(C₆H₅)₂TiCl], Verbindung 19

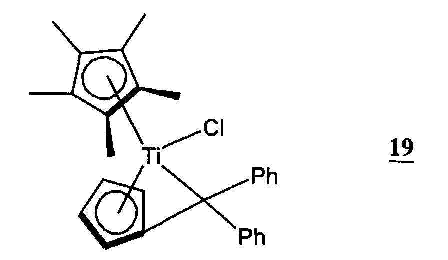

Cp*TiCl₃ (0.690 g, 2.38 mmol) und 1.1 Äquivalente Magnesium (0.064 g, 2.62 mmol) wurden in 20 ml THF vorgelegt. Zu dieser Lösung tropfte man bei RT 1.1 Äquivalente 6,6-Diphenylfulven (0.604 g, 2.62 mmol) zu. Man ließ über Nacht bei RT rühren, so daß alles Magnesium verbraucht wurde. Man entfernte das Lösungsmittel im HV und nahm den Rückstand in Hexan auf. Man filtrierte den Feststoff ab und engte die Lösung zur Hälfte ein. Zum Auskristallisieren kühlte man den Ansatz auf -20°C, wobei 0,29 g (27%) [(C₅(CH₃)₅)(C₅H₄)C(C₆H₅)₂TiCl] als grüner Feststoff erhalten wurde.
¹H-NMR:(C₆D₆, 300 MHz): δ = 1.55 (s, 15 H, C₅(CH₃)₅), 4.20, 4.55, 5.89, 6.37 (m, 1H, C₅H₄), 6.89-7.41 (m, 10H, C₆H₅) ppm.
¹³C-NMR:(C₆D₆, 75 MHz): δ = 12.38 (C₅(CH₃)₅), 116.29, 117.24, 118.22, 121.82 (C₄H₄), 124.04 (C₅(CH₃)₅), 125.61 (ipso-C₅H₄), 126.50, 126.84, 127.26, 128.07, 128.83, 129.81 (C₆H₅), 130.72 (-C(C₆H₅)), 141.93, 144.23 (ipso-C₆H₅) ppm.
MS (70eV) m/e (%): 448 (5) [M⁺], 413 (2) [M⁺-HCl], 230 (100) [6.6-Diphenylfulven], 135 (15) [Cp*], 78 (12) [Ph].

### Beispiel 24

### Fulvenkomplexsynthese durch Reaktion von 6,6-Diphenylfulven mit Cp*ZrCl₃ in Gegenwart von Magnesium [(C₅(CH₃)₅)(C₅H₄)C(C₆H₅)₂ZrCl], Verbindung 20

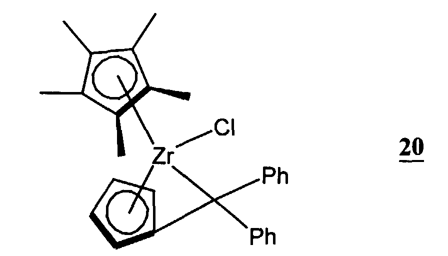

Cp*ZrCl₃ (0.310 g, 0.93 mmol) und 1.05 Äquivalente Magnesium (0.024 g, 0.98 mmol) wurden in 10 ml THF vorgelegt. Zu dieser Lösung tropfte man 1.05 Äquivalente 6,6-Diphenylfulven (0.225 g, 0.98 mmol) zu. Man ließ über Nacht rühren, so daß sich das Magnesium vollständig umgesetzt hat. Man engte im HV zur Trockne ein, nahm in 20 ml Toluol auf und filtrierte ab. Nach der Überschichtung mit Hexan bei -20°C erhielt man 178 mg (39%) [(C₅(CH₃)₅)(C₅H₄)C(C₆H₅)₂ZrCl] als roten Feststoff.
¹H-NMR:(C₆D₆, 300 MHz): δ = 1.63 (s, 15 H, C₅(CH₃)₅), 4.65, 5.20, 5.22, 6.06 (m, 1H, C₅H₄), 6.98-7.16 (m, 8H, C₆H₅), 7.26-7.49 (m, 2H, C₆H₅) ppm.
¹³C-NMR:(C₆D₆, 75 MHz): δ = 11.66 (C₅(CH₃)₅), 104.67, 111.14, 113.62, 117.52 (C₄H₄), 120.82 (C₅(CH₃)₅), 125.61 (ipso-C₅H₄), 126.50, 126.84, 127.26, 128.07, 128.83, 129.81 (C₆H₅), 130.72 (-C(C₆H₅)), 141.93, 144.23 (ipso-C₆H₅) ppm.
MS (70eV) m/e (%): 448 (5) [M⁺], 413 (2) [M⁺-HCl], 230 (100) [6.6-Diphenylfulven], 135 (15) [Cp*], 78 (12) [Ph].

### Beispiel 25

### Fulvenkomplexsynthese durch Reaktion von 2,3,4,5-Tetramethylfulven mit Cp*TiCl₃ in Gegenwart von Magnesium [(C₅(CH)₃)₅)(C₅(CH₃)₄)CH₂TiCl], Verbindung 21

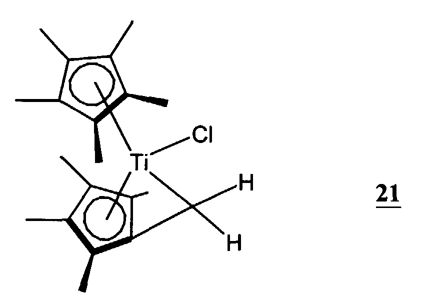

Cp*TiCl₃ (0.370 g, 1.28 mmol) und 1.05 Äquivalente Magnesium (0.033 g, 1.35 mmol) wurden in 25 ml THF vorgelegt. Zu dieser Lösung tropfte man bei Raumtemperatur 1.05 Äquivalente 2,3,4,5-Tetramethylfulven (0.185 g, 1.35 mmol) zu. Man ließ über Nacht bei RT rühren, so daß alles Mg verbraucht wurde. Man entfernte das Lösungsmittel im HV und nahm den Rückstand in Hexan auf. Man filtrierte den Feststoff ab und engte die Lösung zur Hälfte ein. Zum Auskristallisieren kühlte man den Ansatz auf -20°C, wobei 0,23 g (52 %) [(C₅(CH)₃)₅)(C₅(CH₃)₄)CH₂TiCl] als grüner Feststoff erhalten wurde.
¹H-NMR:(C₆D₆, 300 MHz): δ = 1.21, 1.47, 1.70 (s, 3 H, C₅(CH₃)₄=CH₂), 1.79 (s, 3 H, C₅(CH₃)₅), 2.07 (s, 3 H, C₅(CH₃)₄=CH₂), 1.43 (d, 1H, ²J(H,H) = 3.66 Hz, C₅(CH₃)₄=CHH), 2.54 (d, 1H, ²J(H,H) = 3.66 Hz, C₅(CH₃)₄=CHH) ppm.
¹³C-NMR:(C₆D₆, 75 MHz): δ = 9.82, 10.22 (C₅(CH₃)₄=CH₂), 11.13 (C₅(CH₃)₅), 11.85, 14.00 (C₅(CH₃)₄=CH₂), 77.65 (C₅(CH₃)₄=CH₂), 120.08 (C₅(CH₃)₅), 120.32, 124.43, 124.73, 128.61, 135.17 (C₅(CH₃)₄=CH₂) ppm.

### Beispiel 26

### Fulvenkomplexsynthese durch Reaktion von 2,3,4,5-Tetramethylfulven mit CpTiCl₃ in Gegenwart von Magnesium [(C₅H₅)(C₅(CH₃)₄)CH₂TiCl], Verbindung 22

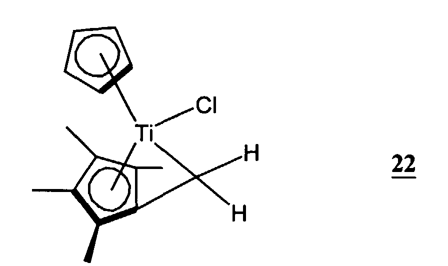

In 20 ml THF wurde CpTiCl₃ (0.350 g, 1.60 mmol) und 1.05 Äquivalente Magnesium (0.041 g, 1.67 mmol) vorgelegt. Zu dieser Lösung tropfte man bei Raumtemperatur 1.1 Äquivalente 2,3,4,5-Tetramethylfulven (0.260 g, 1.67 mmol). Nach 3 Stunden war das eingesetzte Magnesium verbraucht. Es wurde anschließend im HV eingeengt und in 20 ml Hexan aufgenommen. Nach Abfiltration des Feststoffes wurde die dunkelgrüne Lösung zur Hälfte im HV eingeengt. Durch Kristallisation bei -20°C wurden 0,3 g (67%) [(C₅H₅)(C₅(CH₃)₄)CH₂TiCl] als dunkelgrüner Feststoff erhalten.
¹H-NMR:(C₆D₆, 300 MHz): δ = 0.82, 1.27, 1.74 (s, 3 H, C₅(CH₃)₄=CH₂), 1.99 (d, 1H, ²J(H,H) = 3.7 Hz, C₅(CH₃)₄=CHH), 2.05 (s, 3 H, C₅(CH₃)₄=CH₂), 2.56 (d, 1H, ²J(H,H) = 3.7 Hz, C5(CH₃)₄=CHH), 5.77 (s, 5H, C₅H₅) ppm.
¹³C-NMR:(C₆D₆, 75 MHz): δ = 9.47, 10.35, 12.01, 12.95 (C₅(CH₃)₄=CH₂), 74.47 (C₅(CH₃)₄=CH₂), 110.80 (C₅H₅), 119.92, 124.60, 127.82, 129.43, 134.80 (C₅(CH₃)₄=CH₂) ppm.
MS (70ev) m/e (%): 283 (10) [M⁺], 247 (15) [M⁺-HCl], 134 (50) [2,3,4,5-Tetramethylfulven], 119 (100) [2,3,4,5-Tetramethylfulven-CH₄ ], 65 (30) [Cp].

### Beispiel 27

### Fulvenkomplexsynthese durch Reaktion von 1,2,3,4,6-Pentamethylfulven mit CpTiCl₃ in Gegenwart von Magnesium [(C₅H₅)(C₅(CH₃)₄)C(H)(CH₃)TiCl], Verbindung 23

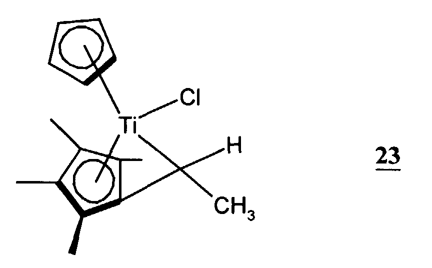

In 20 ml THF wurde CpTiCl₃ (0.450 g, 2.05 mmol) und 1.05 Äquivalente Magnesium (0.054 g, 2.15 mmol) vorgelegt. Zu dieser Lösung tropfte man bei Raumtemperatur 1.03 Äquivalente 1,2,3,4,6-Pentamethylfulven (0.320 g, 2.15 mmol). Nach 3 Stunden war das eingesetzte Magnesium verbraucht. Es wurde anschließend im HV eingeengt und in 20 ml Hexan aufgenommen. Nach Abfiltration des Feststoffes wurde die Lösung zur Hälfte im HV eingeengt. Durch Kristallisation bei -20°C wurden 0,17 g (28 %) [(C₅H₅)(C₅(CH₃)₄)C(H)(CH₃)TiCl] als dunkelgrüner Feststoff erhalten. de: 25 %
¹H-NMR:(C₆D₆, 300 MHz): δ = 0.73, 1.12 (s, 3 H, C₅(CH₃)₄=C(CH₃)(H)), 1.64 (d, 3H, ³J(H,H) = 7.25 Hz, C₅(CH₃)₄=C(CH₃)(H)), 1.71 (s, 3 H, C₅(CH₃)₄=C(CH₃)(H)), 2.29 (q, 1H, ³J(H,H) = 7.25 Hz, C₅(CH₃)₄=C(CH₃)(H)), 2.55 (s, 3H, C₅(CH₃)₄=C(CH₃)(H)), 5.79 (s, 5H, C₅H₅) ppm.
⁻¹³C-NMR:(C₆D₆, 75 MHz): δ = 10.87, 13.35, 16.19, 16.97 (C₅(CH₃)₄=C(CH₃)(H)), 37.62 (C₅(CH₃)₄=C(CH₃)(H)), 94.39 (C₅(CH₃)₄=C(CH₃)(H)), 112.02 (C₅H₅), 121.46, 125.56, 130.91, 131.46, 136.90 (C₅(CH₃)₄=C(CH₃)(H)) ppm.

### Beispiel 28

### Fulvenkomplexsynthese durch Reaktion von 6-tert.-Butylfulven mit Cp*TiCl₃ in Gegenwart von Magnesium [(C₅(CH₃)₅)(C₅H₄))C(H)(C(CH₃)₃)TiCl], Verbindung 24

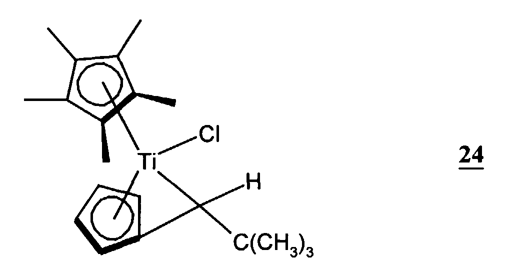

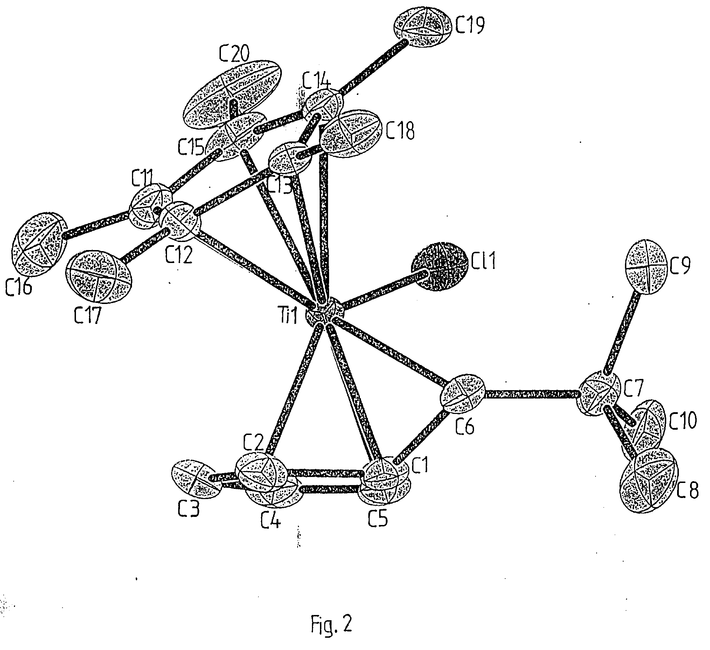

Cp*TiCl₃ (0.450 g, 1.55 mmol) und 1.05 Äquivalente Magnesium (0.039 g, 1.63 mmol) wurden in 15 ml THF vorgelegt. Zu dieser Lösung tropfte man bei RT 1.05 Äquivalente tert.-Butylfulven (0.249 g, 1.63 mmol) zu. Man ließ über Nacht bei RT rühren, so daß alles Magnesium verbraucht wurde. Man entfernte das Lösungsmittel im HV und nahm in Hexan auf. Man filtrierte den Feststoff ab und engt die Lösung zur Hälfte ein. Zum Auskristallisieren kühlte man den Ansatz auf -20°C, wobei 0,35 g (64%) [(C₅(CH₃)₅)(C₅H₄)C(H)(C(CH₃)₃)TiCl] als grüne Kristalle erhalten wurden.
Es wurde eine Röntgenstrukturanalyse von Verbindung **24** durchgeführt (Fig. 2). de: ≥ 98%
¹H-NMR:(C₆D₆, 300 MHz): δ = 1.16 (s, 9H, C₅H₄=C(H)(C(CH₃)₃)), 1.68 (s, 1H, C₅H₄=C(H)(C(CH₃)₃)), 1.70 (s, 15H, C₅(CH₃)₅), 3.15, 4.74, 5.97, 6.63 (m, 1H, C₅H₄=C(H)(C(CH₃)₃)),) ppm.
¹³C-NMR:(C₆D₆, 75 MHz): δ = 11.69 (C₅(CH₃)₅), 32.20 (C₅H₄=C(H)(C(CH₃)₃)), 34.28 (C₅H₄=C(H)(C(CH₃)₃)), 114.31 (C₅H₄=C(H)(C(CH₃)₃)), 117.83, 118.31, 118.77 (C₅H₄=C(H)(C(CH₃)₃)), 120.46 (C₅(CH₃)₅), 124.72, 128.23 (C₅H₄=C(H)(C(CH₃)₃)) ppm.
MS (70eV) m/e (%): 353 (12) [M⁺], 316 (5) [M⁺-HCl], 270 (18), 235 (8), 135 (100) [Cp*], 119 (35), 80 (85), 57 (90) [C(CH₃)₃].

### Beispiel 29

### Fulvenkomplexsynthese durch Reaktion von 6-tert.-Butylfulven mit CpTiCl₃ in Gegenwart von Magnesium [(C₅H₅)(C₅H₄)C(H)(C(CH₃)₃)TiCl], Verbindung 25

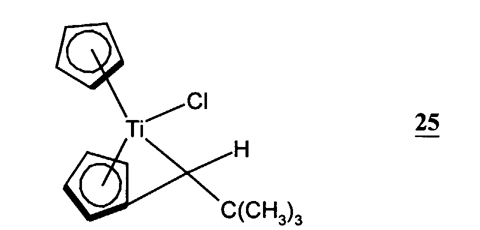

In 10 ml THF wurde CpTiCl₃ (0.420 g, 1.91 mmol) und 1.05 Äquivalente Magnesium (0.048 g, 2.01 mmol) vorgelegt. Zu dieser Lösung tropft man bei RT 1.03 Äquivalente tert.-Butylfulven (0.295 g, 1.91 mmol). Nach 3 Stunden war das eingesetzte Magnesium verbraucht. Es wurde anschließend im HV eingeengt und in 20 ml Hexan aufgenommen. Nach Abfiltration des Feststoffes wurde die Lösung zur Hälfte im HV eingeengt. Durch Kristallisation bei -20°C wurden 0,23 g (44%) [(C₅H₅)(C₅H₄)C(H)(C(CH₃)₃)TiCl] als dunkelgrüne Kristalle erhalten. de: ≥ 98 %
¹H-NMR:(C₆D₆, 300 MHz): δ = 1.05 (s, 9H, C₅H₄=C(H)(C(CH₃)₃)), 2.05 (s, 1 H, C₅H₄=C(H)(C(CH₃)₃)), 3.28, 4.83 (m, 1H, C₅H₄=C(H)(C(CH₃)₃)),) 5.85 (s, 5H, C₅H₅), 6.17, 6.59 (m, 1H, C₅H₄=C(H)(C(CH₃)₃)),) ppm.
¹³C-NMR:(C₆D₆, 75 MHz): δ = 32.84 (C₅H₄=C(H)(C(CH₃)₃)), 35.76 (C₅H₄=C(H)(C(CH₃)₃)), 111.23 (C₅H₅), 111.63 (C₅H₄=C(H)(C(CH₃)₃)), 116.62, 117.41, 121.63, 127.65, 127.50 (C₅H₄=C(H)(C(CH₃)₃)), ppm.
MS (70eV) m/e (%): 282 (5) [M⁺], 246 (45) [M⁺-HCl], 228 (15), 135 (10) [Cp*], 119 (35).

## Patentansprüche

1. Katalysatorsystem, herstellbar durch Umsetzung von
a) einem Fulven-Cyclopentadienyl-Metallkomplex der Formel (I) 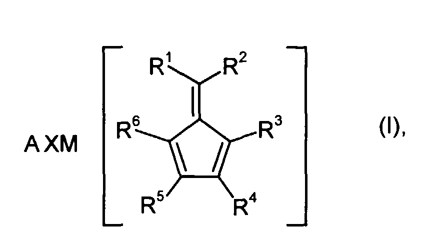 wobei
M ein Metall aus der Gruppe Titan, Zirkonium und Hafnium ist,
A ein Cyclopentadienyl der Formel C₅H_{q}R⁷_{5-q} mit q für 0, 1, 2, 3, 4, 5,
ein Indenyl der Formel C₉H₇₋ᵣR⁷ᵣ mit r für 0, 1, 2, 3, 4, 5, 6, 7,
sowie ein Fluorenyl der Formel C₁₃H₉₋ₚR⁷ₚ mit p für 0, 1, 2, 3, 4, 5, 6, 7, 8, bedeutet,
X ein Wasserstoffatom, eine C₁- bis C₁₀-Alkylgruppe, eine C₁-bis C₁₀-Alkoxygruppe, eine C₆- bis C₁₀-Arylgruppe, eine C₆-bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀-Arylalkenylgruppe, ein Halogenatom oder ein Amid der Formel NR⁷₂ bedeutet,
R¹, R², R³, R⁴, R⁵, R⁶ gleich oder verschieden sind und stehen für Wasserstoff, Halogen, eine Cyanogruppe, eine C₁- bis C₂₀-Alkylgruppe, eine C₁- bis C₁₀-Fluoralkylgruppe, eine C₆- bis C₁₀-Fluorarylgruppe, eine C₁- bis C₁₀-Alkoxygruppe, eine C₆- bis C₂₀-Arylgruppe, eine C₆- bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀-Arylalkenylgruppe, eine C₂ bis C₁₀-Alkinylgruppe, eine durch C₁-C₁₀-Kohlenwasserstoffreste substituierte Silylgruppe, eine durch einen C₁-C₁₀-Kohlenwasserstoffrest substituierte Sulfidgruppe, eine gegebenenfalls durch C₁-C₂₀-Kohlenwasserstoffreste substituierte Aminogruppe,
oder
R¹, R², R³, R⁴, R⁵, R⁶ jeweils zusammen mit den sie verbindenden Atomen ein oder mehrere aliphatische oder aromatische Ringsysteme bilden, welche ein oder mehrere Heteroatome (O, N, S) enthalten können und 5 bis 10 Kohlenstoffatome aufweisen,
R⁷ steht für Wasserstoff, eine C₁- bis C₂₀-Alkylgruppe, eine C₆-bis C₂₀-Arylgruppe, eine C₇- bis C₄₀-Arylalkylgruppe, eine C₇- bis C₄₀-Alkylarylgruppe, eine durch C₁-C₁₀-Kohlenwasserstoffreste substituierte Silylgruppe, eine gegebenenfalls durch C₁-C₂₀-Kohlenwasserstoffreste substituierte Aminogruppe,
mit
b) einer ungesättigten Verbindung der Formel (II)
R⁸ₐR⁹_{b}CY, (II)
wobei
R⁸, R⁹ gleich oder verschieden sind, ein Wasserstoffatom, ein Halogenatom, eine Hydroxygruppe, eine C₁- bis C₁₀-Alkylgruppe, eine C₁- bis C₁₀-Alkoxygruppe, eine gegebenenfalls durch Halogenatome substituierte C₆- bis C₁₀-Arylgruppe, eine C₆-bis C₁₀-Aryloxygruppe, eine C₂- bis C₁₀-Alkenylgruppe, eine C₇- bis C₄₀-Arylalkylgruppe, eine C₇- bis C₄₀-Alkylarylgruppe, eine C₈- bis C₄₀-Arylalkenylgruppe, eine gegebenenfalls durch C₁-C₂₀-Kohlenwasserstoffreste substituierte Aminogruppe, oder eine gegebenenfalls durch C₁-C₂₀-Kohlenwasserstoffreste substituierte Iminogruppe bedeuten
Y ein Stickstoffatom, ein Sauerstoffatom, ein Schwefelatom oder eine Gruppe der Formel NR¹⁰ bedeutet, wobei R¹⁰ die gleiche Bedeutung wie R⁸ und R⁹ hat und
a, b die Zahlen 0 oder 1 darstellen,
und anschließender Umsetzung des Produktes mit
c) einem Cokatalysator.

2. Katalysatorsystem nach Anspruch 1, dadurch gekennzeichnet, daß das molare Verhältnis von Komponente a) zu Komponente c) im Bereich von 1:0,1 bis 1:10 000 liegt.

3. Katalysatorsystem nach Anspruch 1, dadurch gekennzeichnet, daß das molare Verhältnis von Komponente a) zu Komponente b) im Bereich von 100:1 bis 0,1:1 liegt.

4. Verfahren nach Anspruch 1, dadurch gekennzeichnet, daß der Fulvencyclopentadienyl-Metallkomplex der Formel (I) durch Umsetzung einer Übergangsmetallverbindung der Formel (III)
AXₛLₙM (III)
wobei
A, X, L, M und n die gleiche Bedeutung wie in Anspruch 1 besitzen und
s die Zahl 1, 2 oder 3 bedeutet
mit einer Fulvenverbindung der Formel (IV) 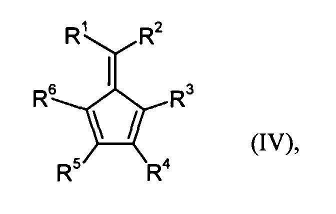 wobei
R¹, R², R³, R⁴, R⁵ und R⁶ die gleiche Bedeutung, wie in Anspruch 1 besitzen,
in Gegenwart eines Reduktionsmittels hergestellt wird.

5. Verfahren zur Herstellung des Katalysatorsystems gemäß Anspruch 1, dadurch gekennzeichnet, daß man das Produkt aus a) und b) isoliert und anschließend mit c) umsetzt.

6. Verfahren zur Herstellung des Katalysatorsystems gemäß Anspruch 1, dadurch gekennzeichnet, daß man das Produkt aus a) und b) ohne vorherige Isolation mit c) umsetzt.

7. Verwendung des Katalysatorsystems nach Anspruch 1 zur Polymerisation von Olefinen und/oder Dienen, gegebenenfalls in Anwesenheit eines weiteren Cokatalysators und/oder eines Trägermaterials.
